# EUROPEAN PATENT SPECIFICATION

(11) **EP 4 513 075 B1**
(45) Date of publication and mention of the grant of the patent: **18.03.2026**
(21) Application number: 24190763.3
(22) Date of filing: 24.07.2024
(51) Int. Cl.: F16M 11/18, F16B 7/10, F16M 11/26, F16M 11/38

(54) **COLLAPSIBLE SUPPORT SYSTEMS AND METHODS**
ZUSAMMENKLAPPBARE TRÄGERSYSTEME UND VERFAHREN
SYSTÈMES ET PROCÉDÉS DE SUPPORT PLIABLES

(30) Priority: 24.08.2023 IN 202321056657
(43) Date of publication of application: 26.02.2025
(73) Proprietor: Vertiv Corporation, Westerville, OH 43082 (US)
(72) Inventor: RANCIC, Denis, 10430 Samobor (IN); BRACIC, Ante, 10040 Zagreb (HR); MULABDIC, Alen, 10040 Zagreb (HR); AMBALE, Swapnil U., 416218 Maharashtra (IN); THAKARE, Atharva K., 431003 Maharashtra (IN)
(74) Representative: Bryn-Jacobsen, Caelia

(56) References cited:
- US-A1- 2004 070 179
- US-A1- 2008 203 865
- US-A1- 2014 345 039
- US-A1- 2015 108 296

## Description

### CROSS REFERENCE TO RELATED APPLICATIONS

This application claims the benefit of Indian Provisional Patent Application No. 202321056657 filed August 24, 2023.

### TECHNICAL FIELD

The present disclosure relates generally to support structures and more specifically relates to support structures for data centers.

### BACKGROUND

Datacenters often have differing site conditions. As such, different mounting heights may be required for different sites. This can require stocking a large variety of different stands, or other support structures, such as trusses. Trusses, used in data centers for example, can be bulky and can require significant storage and transportation space. For this reason, such trusses are often stored and/or transported disassembled. However, this only increases the labor required for installation, once on site, as the trusses then need to be assembled during installation.

US2004/070179A1 in an abstract states that "A collapsible support structure has pairs of leg members (17) pivotally joined intermediate their length in crossed fashion by a connection member (18) that is capable of sliding longitudinally with the pivotal joint as the leg members extend in a scissors-like manner to support an object."

US2014/345039A1 in an abstract states that "A portable collapsible toilet enclosure includes a base portion and a lid portion which is vertically moveable relative to the base. The base and lid are connected by one or more telescoping members and/or a collapsible door structure, which telescoping members and/or collapsible door structure extend to raise the lid relative to the base and are lockable in the extended position to provide structural support for the enclosure. The telescoping members and/or collapsible door structure are retractable to lower the lid relative to the base, and the lid may be secured to the base thereby creating a portable unit."

US2015/108296A1 in an abstract states that "A collapsible leg assembly configured to elevate an object above a floor surface includes at least one pair of leg members, each of the leg members including an inner tubular member telescopically received within an outer tubular member; an attachment member operatively connecting a first of the outer tubular members to a second of the outer tubular members, thereby establishing a pivotal axis about which the leg members are capable of rotating relative to one another; and at least one pair of latching devices, each of the latching devices being configured to selectively prevent the relative sliding movement of one of the inner tubular members relative to its respective outer tubular member. In one or more embodiments, the attachment member and the pivotal axis defined thereby are disposed at a fixed location along the length of each of the outer tubular members between the first and second ends thereof."

US2008/203865A1 in an abstract states that "The adjustable stand has lower and upper components spaced vertically apart. The upper component supports a monitor of a computer and is movable upwardly and downwardly relative to the lower component while the lower component remains fixed in position. An operator of the computer can accordingly adjust the monitor to eye-level whether the operator is standing or is seated. A platform supports a keyboard and is movable with the upper component. The level of the platform may be adjusted selectively upwardly and downwardly relative to the upper component."

### SUMMARY

Aspects of the present disclosure are set out in claim 1. Other aspects and features of the present disclosure are set out in the dependent claims and the description below.

The invention concerns a collapsible support system. A collapsible support system according to the disclosure can be stored and/or transported in a fully collapsed position or configuration, which can save space and increase efficiency during storage and transportation. Once on site, the system can be selectively expanded into any desired position of a number of available positions among or between the fully collapsed position and a fully expanded position. In this manner, a single system can be utilized in a variety of situations and can accommodate various and/or variable on-site conditions or requirements, thereby simplifying logistical, design, and engineering considerations.

In at least one example, a support system according to the disclosure, such as a collapsible or adjustable support system, can include a plurality of rigid support members, a plurality of telescoping support members, and one or more locking mechanisms for selectively fixing the system in one or more positions or configurations, such as in a plurality of dimensions. In at least one example, a collapsible support system can include a first rigid support member, a second rigid support member, which can be parallel to the first rigid support member, and a locking mechanism. In at least one example, the first rigid support member can be a first beam and/or the second rigid support member can be a second beam. In at least one example, the first rigid support member can be a first truss and/or the second rigid support member can be a second truss.

In at least one example, the locking mechanism can be configured to permit movement of the first rigid support member with respect to the second rigid support member between a first position and a second position. In at least one example, the first rigid support member can be spaced farther from the second rigid support member in the second position than in the first position. In at least one example, the locking mechanism can also be configured to lock the first and second rigid support members in the second position. In at least one example, the locking mechanism can lock the first and second rigid support members in one or more other positions, such as one or more positions between the first position and the second position. In at least one example, the locking mechanism can lock the first and second rigid support members in any position between the first position and the second position.

In at least one example, the locking mechanism can include a first locking telescoping member and a second locking telescoping member. In at least one example, the first locking telescoping member can be orthogonal to the second locking telescoping member in the second position.

According to the invention, the first locking telescoping member includes a first concentric lock. The second locking telescoping member includes a second concentric lock. Both concentric locks include an outer housing fixedly mounted to an inner section of the corresponding locking telescoping member and an inner pin slideably mounted within the outer housing. According to the invention, the inner pin is biased towards an extended position in which the inner pin extends from the outer housing and engages a hole in an outer section of the corresponding locking telescoping member, thereby locking the corresponding locking telescoping member and preventing further telescoping thereof. The inner pin is pushed into the outer housing and rotated with respect thereto, thereby locking the inner pin within the outer housing and permitting the corresponding locking telescoping member to telescope freely. In at least one example, the inner pin can receive a bolt therethrough.

In at least one example, the locking mechanism can include a first locking telescoping member and a second locking telescoping member adjacent to a first end of the first and second rigid support members. In at least one example, the locking mechanism can include a third locking telescoping member and a fourth locking telescoping member adjacent to a second end of the first and second rigid support members. In at least one example, in the second position, the first locking telescoping member can be orthogonal to the second locking telescoping member and/or the third locking telescoping member can be orthogonal to the fourth locking telescoping member.

In at least one example, any or each of the locking telescoping members can include a concentric lock. In at least one example, each concentric lock can include an outer housing fixedly mounted to an inner section of the corresponding locking telescoping member and an inner pin slideably mounted within the outer housing. In at least one example, the inner pin can be biased towards an extended position in which the inner pin extends from the outer housing and engages a hole in an outer section of the corresponding locking telescoping member, thereby locking the corresponding locking telescoping member and preventing further telescoping thereof. In at least one example, each inner pin can be pushed into the corresponding outer housing and rotated with respect thereto, thereby locking the inner pin within the corresponding outer housing and permitting the corresponding locking telescoping member to telescope freely.

In at least one example, the inner pin of the first locking telescoping member and the inner pin of the second locking telescoping member can receive a first bolt therethrough, thereby locking the first and second rigid support members in the second position and/or rigidly fixing the first locking telescoping member with respect to the second locking telescoping member. According to the invention, the locking mechanism includes a plurality of crossing pairs of locking telescoping members. Each crossing pair of the locking telescoping members can receive a bolt therethrough when the first and second rigid support members are in the second position, thereby locking the first and second rigid support members in the second position and/or rigidly fixing each crossing pair of the locking telescoping members.

In at least one example, the locking mechanism can include an adjustment system, such as one or more screw jacks, one or more scissor jacks, one or more hydraulic jacks, one or more rack and pinion mechanisms, one or more other jack or adjustment mechanisms, or any combination thereof, configured to adjust a distance between the first rigid support member and the second rigid support member and/or one or more crossing pairs of locking telescoping members. In at least one example, each crossing pair of the locking telescoping members can receive a bolt therethrough when the first and second rigid support members are in the second position, thereby locking the first and second rigid support members in the second position and/or rigidly fixing each crossing pair of the locking telescoping members.

In at least one example, each locking telescoping member can include a concentric lock. In at least one example, each concentric lock can include an outer housing fixedly mounted to an inner section of the corresponding locking telescoping member and an inner pin slideably mounted within the outer housing. In at least one example, the inner pin can be biased towards an extended position in which the inner pin extends from the outer housing and engages a hole in an outer section of the corresponding locking telescoping member, thereby locking the corresponding locking telescoping member and preventing further telescoping thereof. In at least one example, each inner pin can be pushed into the corresponding outer housing and rotated with respect thereto, thereby locking the inner pin within the corresponding outer housing and permitting the corresponding locking telescoping member to telescope freely.

In at least one example, a first crossing pair of locking telescoping members can include a first locking telescoping member and a second locking telescoping member. In at least one example, the inner pin of the first locking telescoping member and the inner pin of the second locking telescoping member can align and/or receive a first bolt therethrough, such as when the first and second rigid support members are in the second position, thereby locking the first and second rigid support members in the second position and/or rigidly fixing the first locking telescoping member with respect to the second locking telescoping member.

In at least one example, the locking mechanism can be configured to lock the first and second rigid support members in the first position and/or multiple positions. For example, in at least one example, the locking mechanism can be configured to lock the first and second rigid support members in a third position, in which the first rigid support member can be spaced farther from the second rigid support member than in the second position.

In at least one example, the system can include a first pair of locking telescoping members coupled to first ends of the first and second rigid support members, and a second pair of locking telescoping members coupled to second ends of the first and second rigid support members. In at least one example, each of the locking telescoping members can be configured to be selectively locked at a plurality of different lengths, thereby selectively limiting a maximum distance between the first and second rigid support members. In at least one example, each of the locking telescoping members can be configured to be selectively locked at a plurality of different lengths, thereby allowing a user to choose among a plurality of different system dimensional arrangements, such as heights and widths. In at least one example, each of the locking telescoping members can include an end fixedly attached to the first rigid support member and another end fixedly attached to the second rigid support member. In at least one example, each of the locking telescoping members can include an end rotateably attached to the first rigid support member and another end rotateably attached to the second rigid support member. In at least one example, the first pair of locking telescoping members can be rotateably coupled to one another and the second pair of locking telescoping members can be rotateably coupled to one another, such as at positions between the first and second rigid support members. In at least one example, the locking mechanism and the first and second pairs of locking telescoping members can be collectively configured to enable selective adjustment and locking of the system among a plurality of different dimensional combinations, which can include heights, widths and/or lengths. In at least one example, the locking mechanism, which can include one or more pairs of locking telescoping members, or any portions thereof, can be collectively configured to enable selective adjustment and locking of the system among any of a plurality of different dimensional combinations, which can include heights, widths, and/or lengths. In at least one example, the locking mechanism and/or the pairs of locking telescoping members can be collectively configured to enable selective adjustment and locking of the system among any of a plurality of different configurations having varying distances between the first and second rigid support members.

In at least one example, the system can include an adjustment system having one or more cross members for supporting positioning of the first and second rigid support members, such as a first pair of cross members coupled to the first and second rigid support members and a second pair of cross members coupled to the first and second rigid support members. In at least one example, each cross member can have an end rotateably coupled to a fixed support on one of the first and second rigid support members and another end rotateably and/or slideably coupled to one of the first and second rigid support members. In at least one example, movement of the cross members can cause or result in corresponding movement of one or more other system components, such as the first and second rigid support members and the locking telescoping members.

In at least one example, the adjustment system can include one or more sliding supports slideably coupled to a corresponding one of the first and second rigid support members. In at least one example, one end of each cross member can be rotatably coupled to a sliding support, and each sliding support can be slideably coupled to one or more corresponding guide members coupled to one of the first and second rigid support members. In at least one example, one end of each of the cross members can be slideably coupled to one of the first and second rigid support members. In at least one example, the first pair of cross members can be rotateably coupled to one another and the second pair of cross members can be rotateably coupled to one another, such as at positions between the first and second rigid support members.

In at least one example, the system can include a first pair of sliding supports slideably coupled to the first rigid support member, and a second pair of sliding supports slideably coupled to the second rigid support member. In at least one example, an end of each of the cross members can be rotateably coupled to corresponding ones of the sliding supports. In at least one example, the system can include a first pair of guide members coupled to the first rigid support member, and a second pair of guide members coupled to the second rigid support member. Respective ones of the first pair of sliding supports can be slideably coupled to corresponding ones of the first pair of guide members, and respective ones of the second pair of sliding supports can be slideably coupled to corresponding ones of the second pair of guide members.

In at least one example, the system can include an actuator member coupled to a pair of sliding supports and configured to be driven relative to a pair of guide members in unison with the sliding supports. In at least one example, an actuator driver can be configured to selectively move the actuator member for causing a change of position of at least one of the first and second rigid support members. In at least one example, the actuator driver can be a feedscrew, and the feedscrew can be rotateably coupled to one or more of the rigid support members and threadably coupled to the actuator member. In at least one example, the system can include an actuator coupled to the actuator driver and configured to selectively move the actuator driver for causing a change of position of the actuator member. In at least one example, the actuator can be or can include a motor. In at least one example, the actuator can be removably coupled to one or more other system components. In at least one example, the actuator can be manually driven (e.g., crank, wrench, etc.).

### BRIEF DESCRIPTION OF THE DRAWINGS

FIG. 1 is an elevation view of one of many examples of a truss according to the disclosure.
FIG. 2 is an elevation view of the truss of FIG. 1, shown in a collapsed position, according to the disclosure.
FIG. 3 is a perspective view of another one of many examples of a truss according to the disclosure, shown in a collapsed position.
FIG. 4 is a perspective view of the truss of FIG. 3, shown in a partially expanded position, according to the disclosure.
FIG. 5 is a perspective view of the truss of FIG. 3, shown in a fully expanded position, according to the disclosure.
FIG. 6 is a perspective view of still another one of many examples of a truss according to the disclosure, shown in a collapsed position.
FIG. 7 is a perspective view of the truss of FIG. 6, shown in an expanded position, according to the disclosure.
FIG. 8 is a perspective view of one of many examples of a telescoping member, according to the disclosure.
FIG. 9 is a perspective view of the telescoping member of FIG. 8, shown in a locked position, according to the disclosure.
FIG. 10 is a partially exploded view of the telescoping member of FIG. 9 according to the disclosure.
FIG. 11 is a perspective view of the telescoping member of FIG. 10, with inner and outer sections of the telescoping member shown partially transparent to show a concentric lock according to the disclosure.
FIG. 12 is a perspective view of the concentric lock of FIG. 11, shown in an extended position, according to the disclosure.
FIG. 13 is a perspective view of the concentric lock of FIG. 11, shown in a compressed position, according to the disclosure.
FIG. 14 is a perspective view of the concentric lock of FIG. 11, shown in a disengaged position, according to the disclosure.
FIG. 15 is a cut-away perspective view of one of many examples of a telescoping member, according to the disclosure.
FIG. 16 is a cut-away perspective view of a portion of the telescoping member of Fig. 15 according to the disclosure.
FIG. 17 is a cut-away perspective view of another portion of the telescoping member of Fig. 15 according to the disclosure.
FIG. 18 is a front elevation view of one of many examples of a concentric lock, shown in a compressed position, according to the disclosure.
FIG. 19 is a cut-away side elevation view of the concentric lock of FIG. 18.
FIG. 20 is a front elevation view of one of many examples of a concentric lock, shown in an extended position, according to the disclosure.
FIG. 21 is a cut-away side elevation view of the concentric lock of FIG. 20.
FIG. 22 is a cut-away side elevation view of a portion of one of many examples of a telescoping member, showing a concentric lock in an extended position, according to the disclosure.
FIG. 23 is a cut-away perspective view of a concentric lock according to the disclosure.
FIG. 24 is a perspective view of one of many examples of a concentric lock according to the disclosure, shown in an extended position.
FIG. 25 is a perspective view of one of many examples of a concentric lock according to the disclosure, shown in a compressed position.
FIG. 26 is a perspective view of one of many examples of a concentric lock according to the disclosure, shown in a disengaged position.
FIG. 27 is a perspective view of one of many examples of a pin of the concentric lock of FIG. 25 according to the disclosure.
FIG. 28 is a perspective view of one of many examples of a pin of the concentric lock of FIG. 26 shown in a disengaged position.
FIG. 29 is a cut-away perspective view of the concentric lock of FIG. 25 according to the disclosure.
FIG. 30 is a cut-away perspective view of the concentric lock of FIG. 26 shown in a disengaged position.
FIG. 31 is a perspective view of one of many examples of a pin for a concentric lock according to the disclosure.
FIG. 32 is a front elevation view of one of many examples of a pin for a concentric lock according to the disclosure.
FIG. 33 is a perspective view of one of many examples of a key for a concentric lock according to the disclosure.
FIG. 34 is a perspective view of one of many examples of an adjustable support system, shown in an expanded position, according to the disclosure.
FIG. 35 is a perspective view of one of many examples of an adjustable support system, shown in a partially expanded position, according to the disclosure.
FIG. 36 is a perspective view of one of many examples of an adjustable support system, shown in a collapsed position, according to the disclosure.
FIG. 37 is a cut-away perspective view of one of many examples of a telescoping member according to the disclosure.
FIG. 38 is a perspective view of one of many examples of a telescoping member, showing different mounting positions, according to the disclosure.
FIG. 39 is a perspective view of another one of many examples of an adjustable support system according to the disclosure.
FIG. 40 is a perspective view of still another one of many examples of an adjustable support system according to the disclosure.

### DETAILED DESCRIPTION

The Figures described above and the written description of specific structures and functions below are not presented to limit the scope of what Applicant has invented or the scope of the appended claims. Rather, the Figures and written description are provided to teach any person skilled in the art to make and use of the patent protection is sought. Those skilled in the art will appreciate that not all features of a commercial example are described or shown for the sake of clarity and understanding. Persons of skill in this art will also appreciate that the development of an actual commercial example incorporating aspects will require numerous implementation-specific decisions to achieve the developer's ultimate goal for the commercial example. Such implementation-specific decisions may include, and likely are not limited to, compliance with system-related, business-related, government-related and other constraints, which may vary by specific implementation, location and from time to time. While a developer's efforts might be complex and time-consuming in an absolute sense, such efforts would be, nevertheless, a routine undertaking for those of skill in this art having benefit of this disclosure. It must be understood the examples disclosed and taught herein are susceptible to numerous and various modifications and alternative forms.

The use of a singular term, such as, but not limited to, "a," is not intended as limiting of the number of items. Also, the use of relational terms, such as, but not limited to, "top," "bottom," "left," "right," "upper," "lower," "down," "up," "side," and the like are used in the written description for clarity in specific reference to the Figures and are not intended to limit the scope of the appended claims. The terms "including" and "such as" are illustrative and not limitative. The terms "couple," "coupled," "coupling," "coupler," and like terms are used broadly herein and can include any method or device for securing, binding, bonding, fastening, attaching, joining, inserting therein, forming thereon or therein, communicating, or otherwise associating, for example, mechanically, magnetically, electrically, chemically, operably, directly or indirectly with intermediate elements, one or more pieces of members together and can further include without limitation integrally forming one functional member with another in a unity fashion. The coupling can occur in any direction, including rotationally. Further, all parts and components of the disclosure that are capable of being physically embodied inherently include imaginary and real characteristics regardless of whether such characteristics are expressly described herein, including but not limited to characteristics such as axes, ends, inner and outer surfaces, interior spaces, tops, bottoms, sides, boundaries, dimensions (e.g., height, length, width, thickness), mass, weight, volume and density, among others.

Any process flowcharts discussed herein illustrate the operation of possible implementations of systems, methods, and computer program products according to various examples of the present disclosure. In this regard, each block in a flowchart may represent a module, segment, or portion of code, which can include one or more executable instructions for implementing the specified logical function(s). It should also be noted that, in some implementations, the function(s) noted in the block(s) might occur out of the order depicted in the figures. For example, blocks shown in succession may, in fact, be executed substantially concurrently. It will also be noted that each block of flowchart illustration can be implemented by special purpose hardware-based systems that perform the specified functions or acts, or combinations of special purpose hardware and computer instructions.

Applicant has created new and useful devices, systems and methods for collapsible support systems, such as for advantageously increasing the efficiency of installation thereof. In at least one example, a collapsible support system according to the disclosure can include a plurality of support members and one or more locking mechanisms. In at least one example, the locking mechanism(s) can selectively permit movement of one or more support members relative to one or more other support members, such as between or among two or more positions. In at least one example, one support member can be spaced or disposed farther from another support member in one position relative to another position. In at least one example, the locking mechanism(s) and a plurality of telescoping members can collectively provide for choosing among a plurality of different dimensional configurations and selectively locking the system into a chosen configuration.

A collapsible support system according to the disclosure can be stored and/or transported in a fully collapsed position or configuration, which can save space and increase efficiency during storage and transportation. Once on site, the system can be selectively expanded into any desired position of a number of available positions among or between the fully collapsed position and a fully expanded position. In this manner, a single system can be utilized in a variety of situations and can accommodate various and/or variable on-site conditions or requirements, thereby simplifying logistical, design, and engineering considerations.

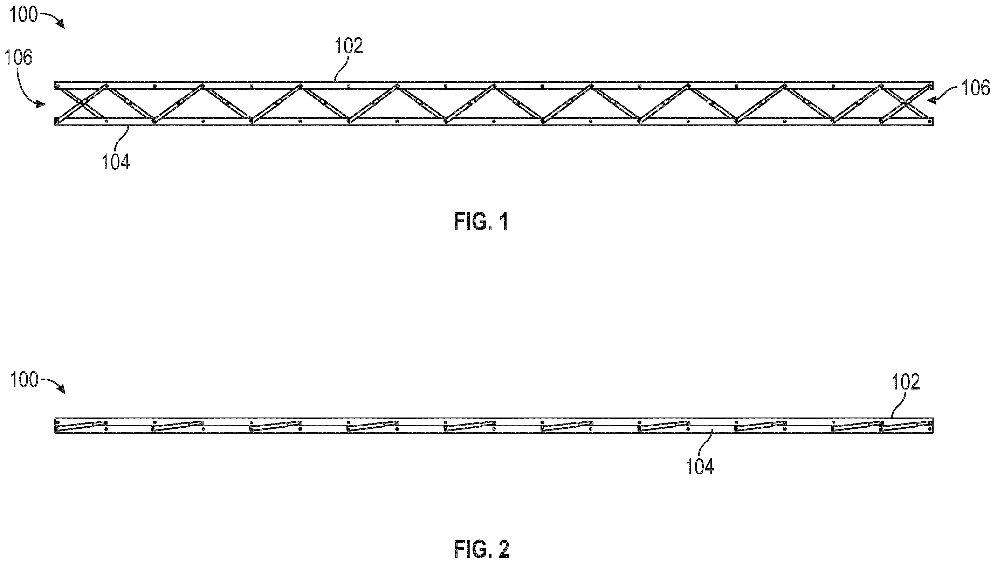

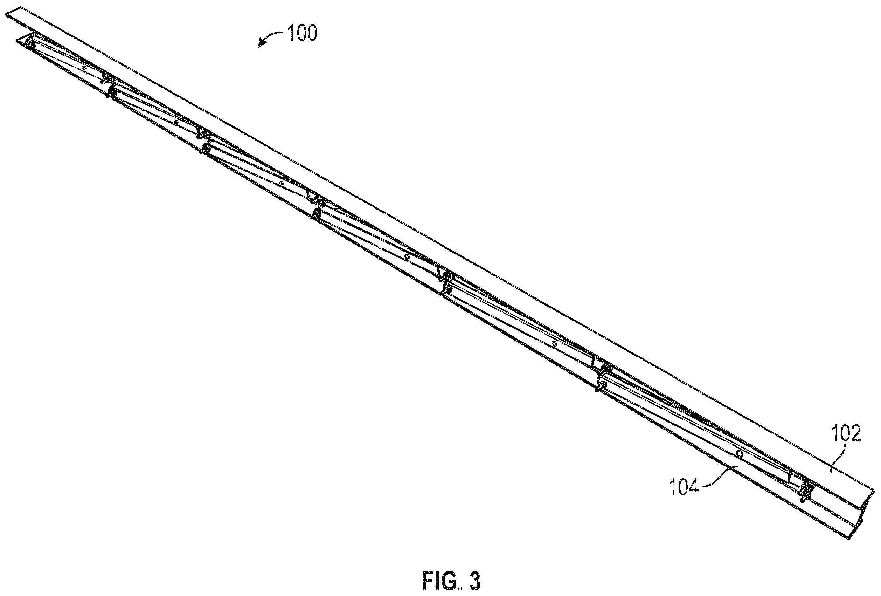

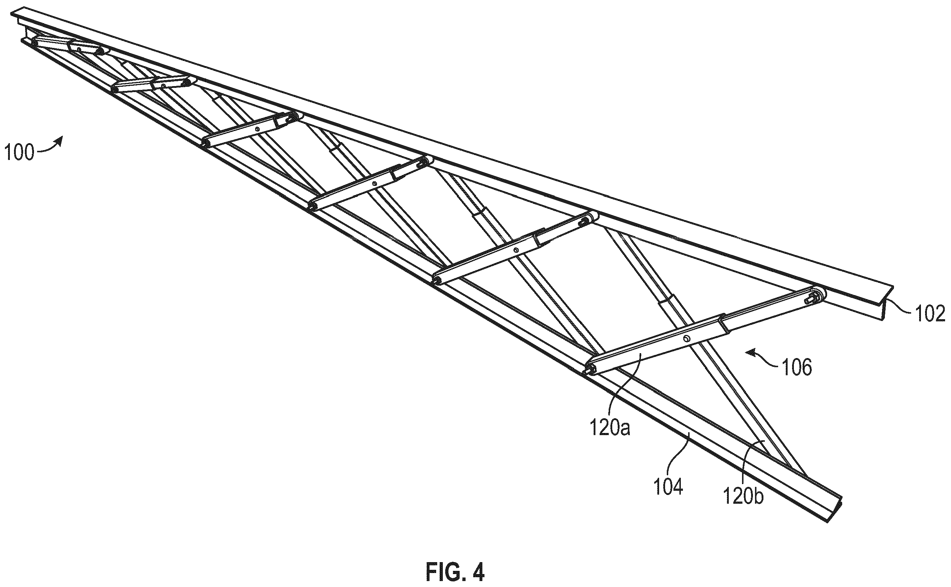

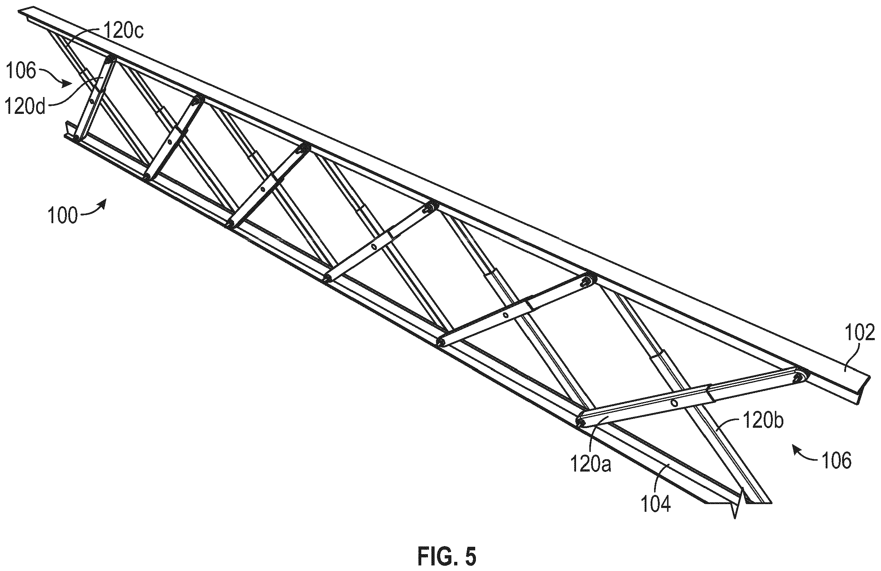

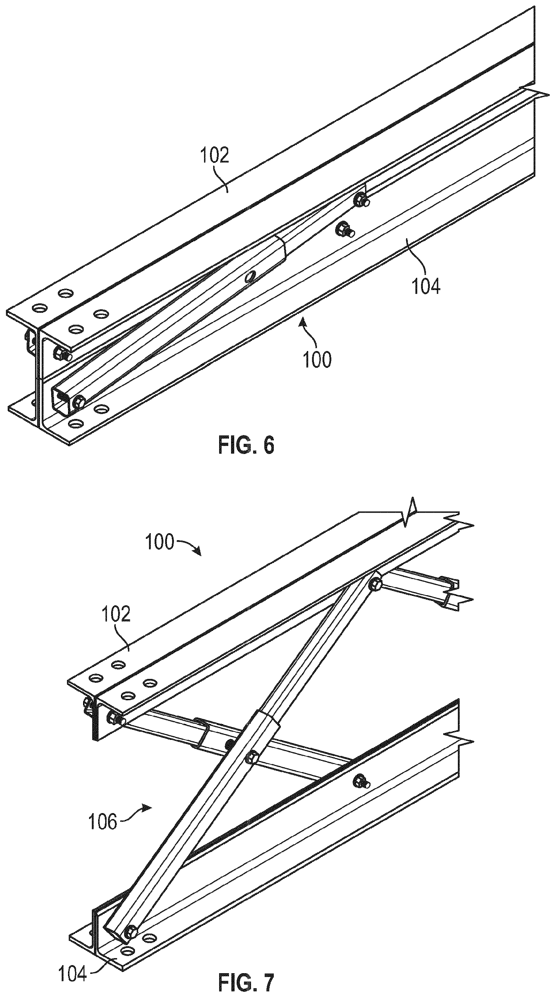

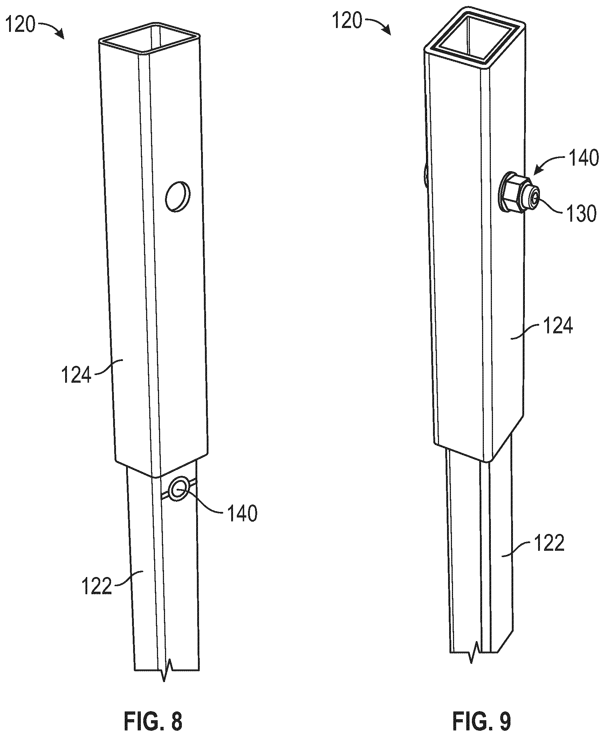

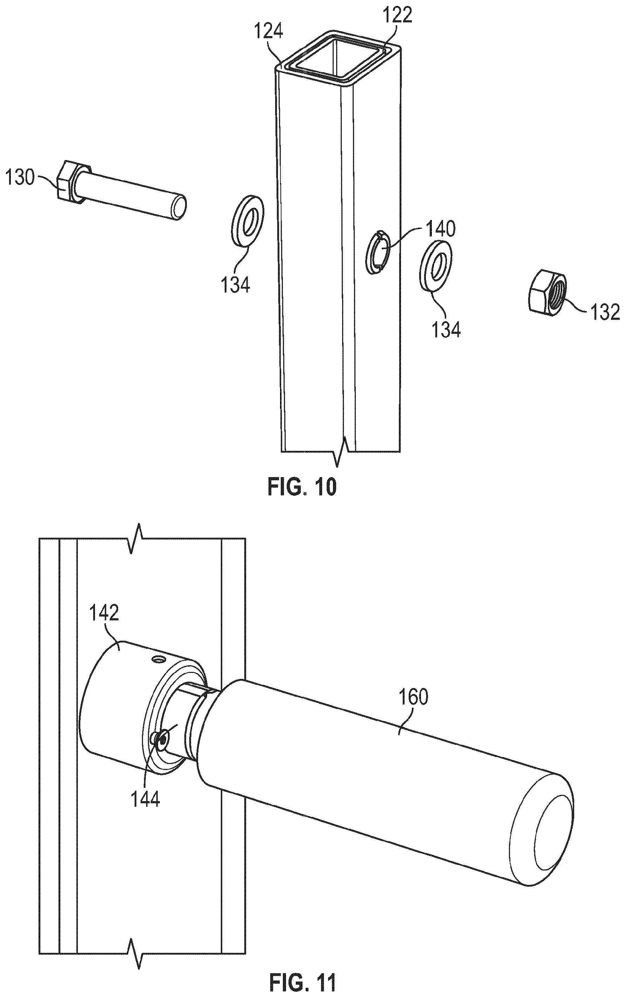

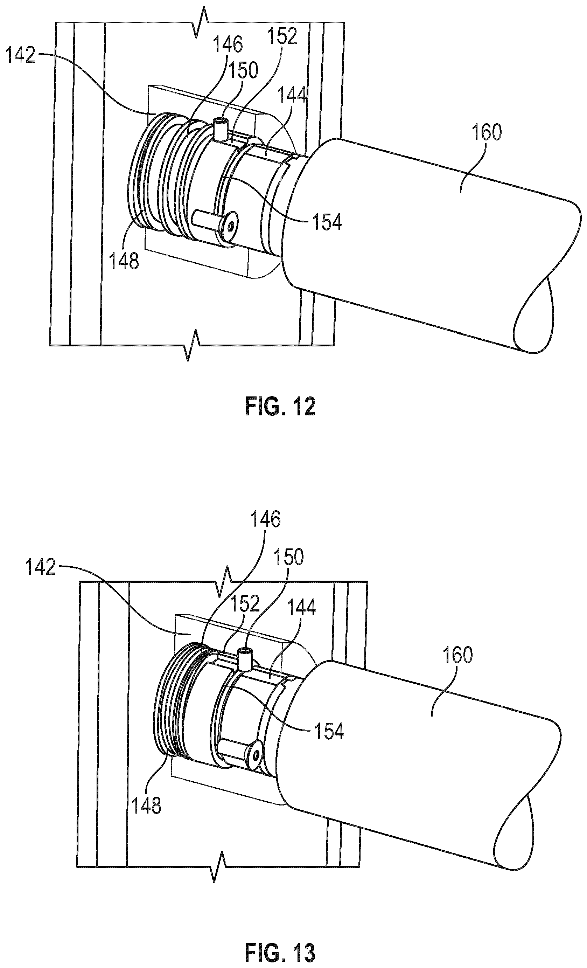

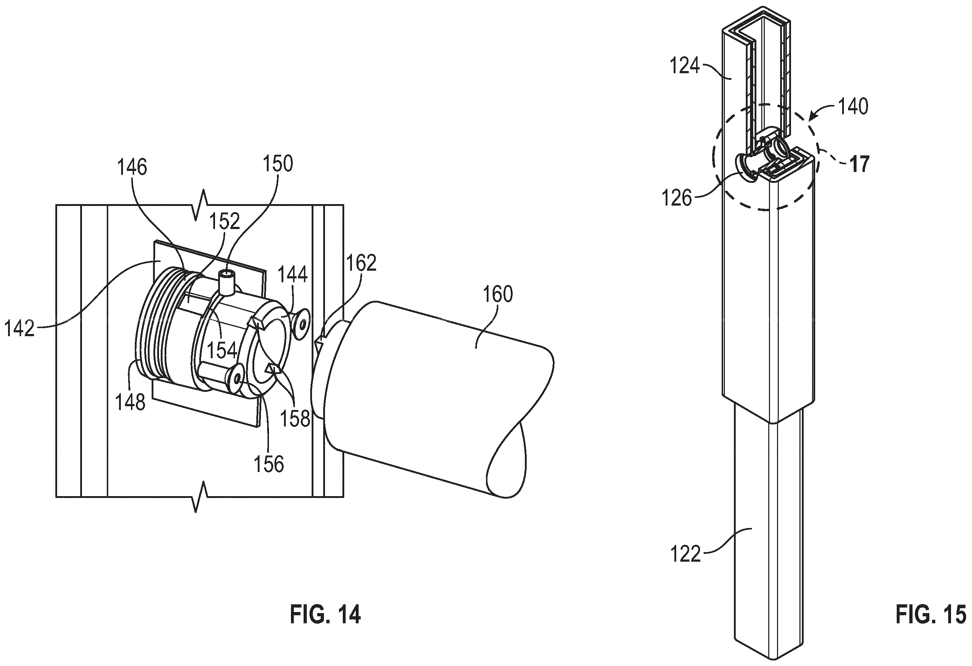

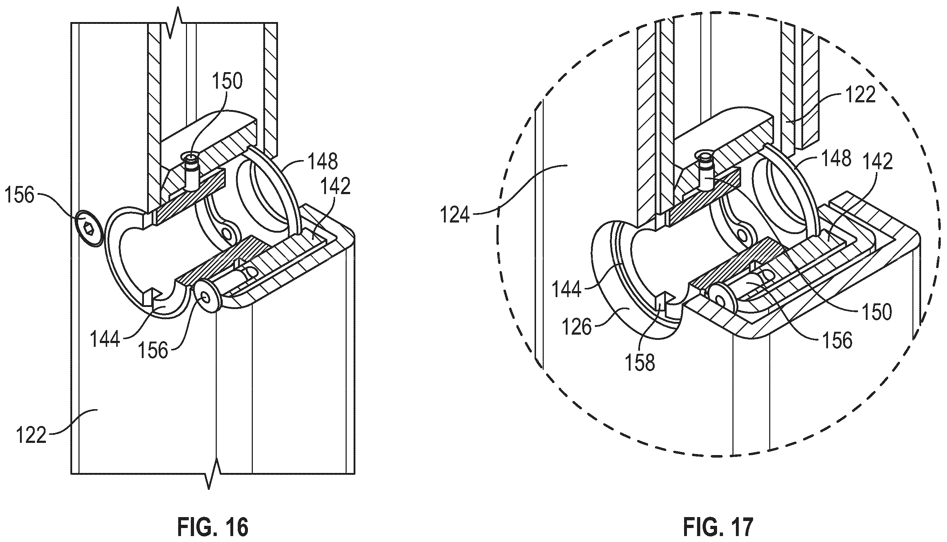

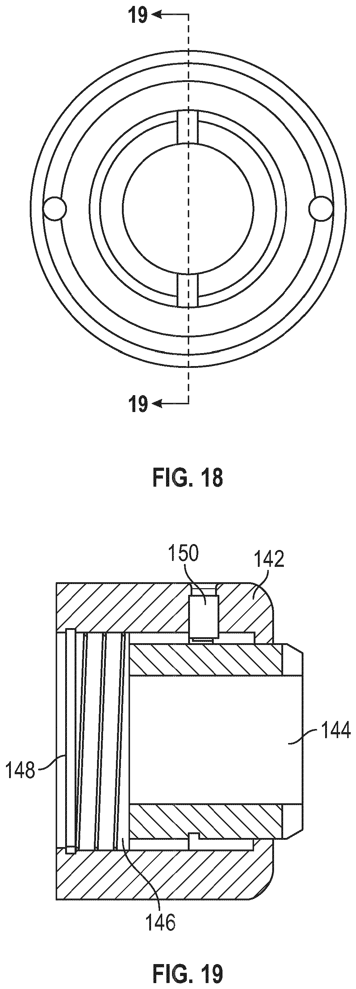

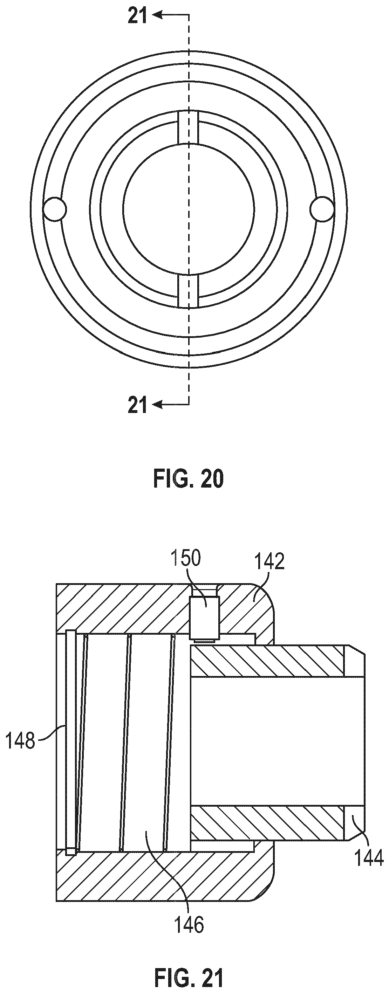

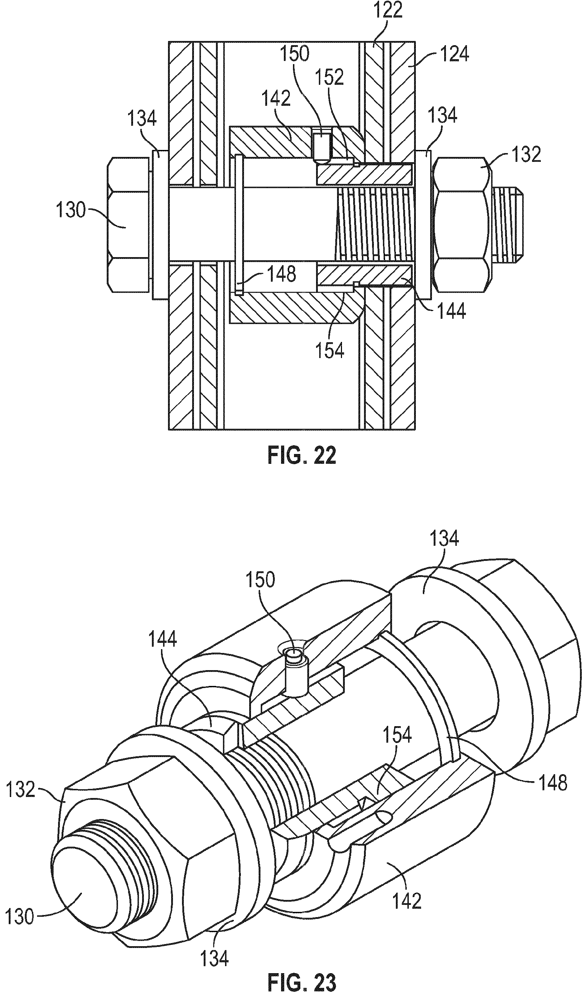

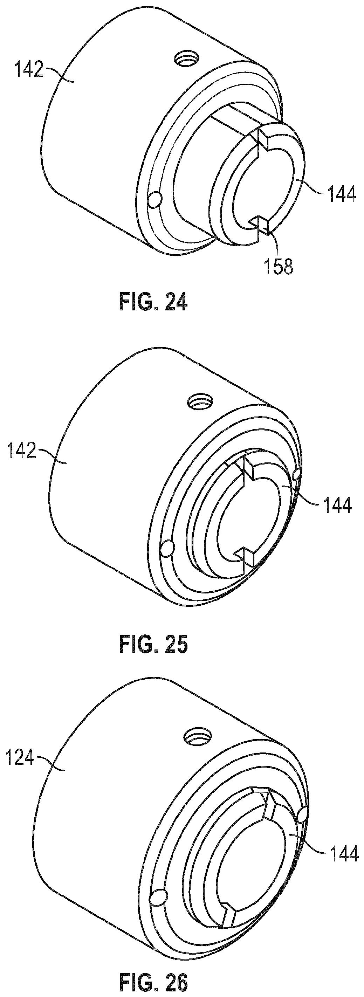

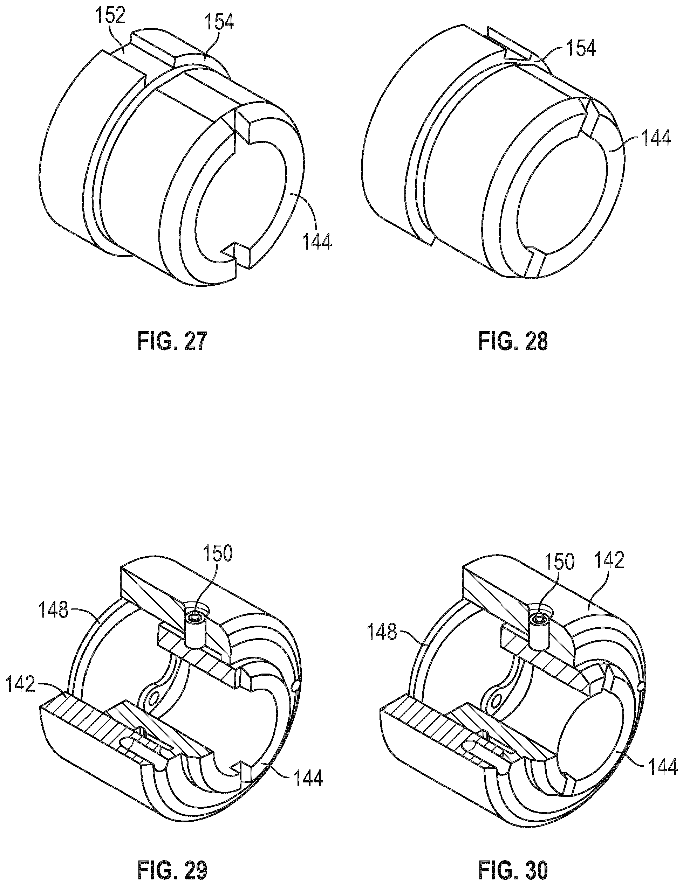

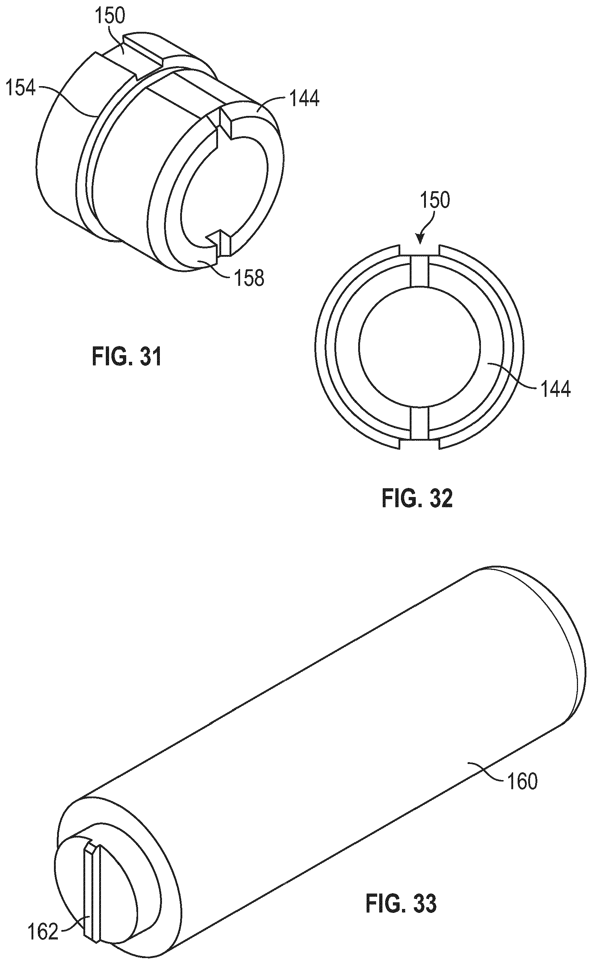

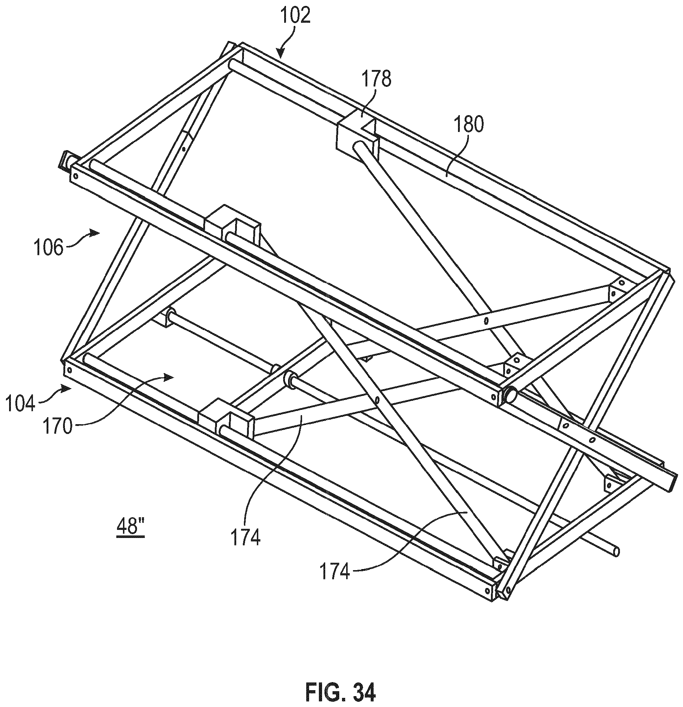

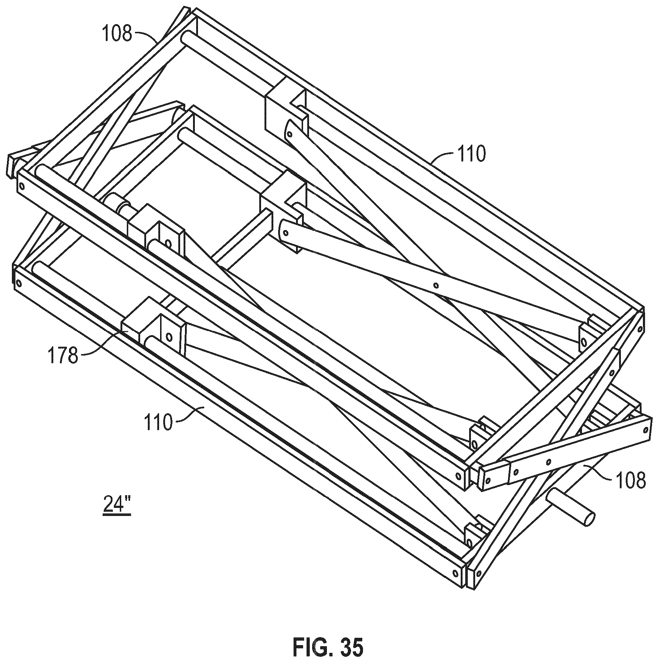

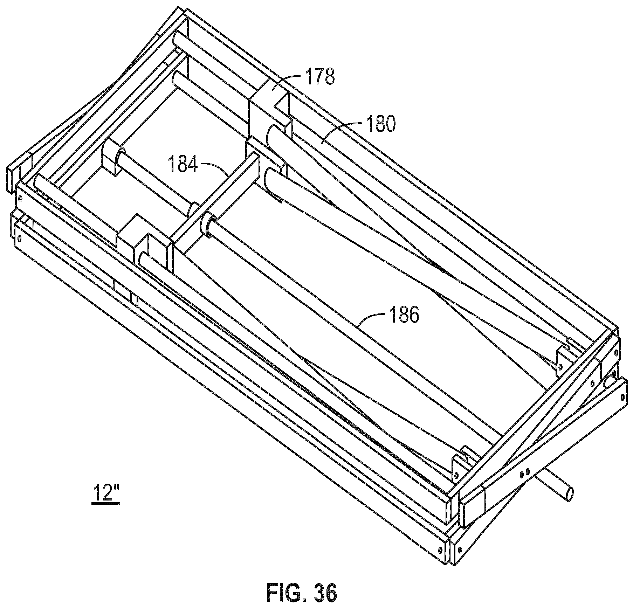

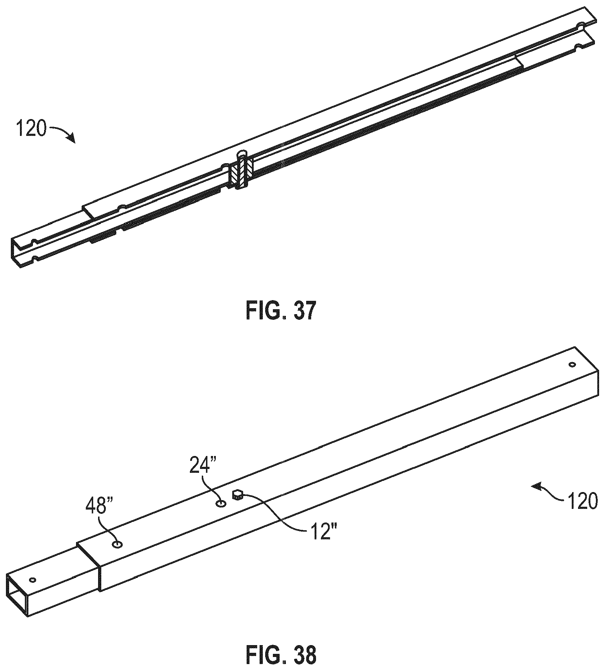

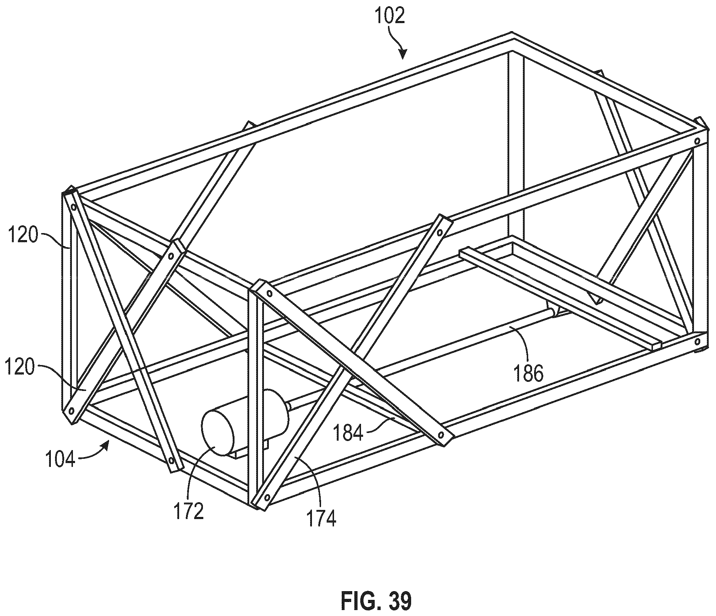

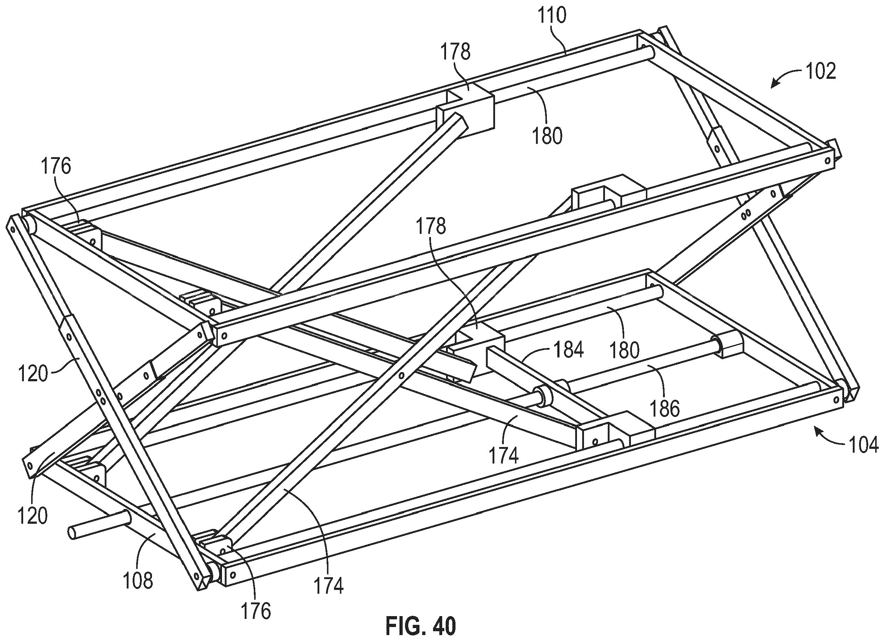

FIG. 1 is an elevation view of one of many examples of a truss according to the disclosure. FIG. 2 is an elevation view of the truss of FIG. 1, shown in a collapsed position, according to the disclosure. FIG. 3 is a perspective view of another one of many examples of a truss according to the disclosure, shown in a collapsed position. FIG. 4 is a perspective view of the truss of FIG. 3, shown in a partially expanded position, according to the disclosure. FIG. 5 is a perspective view of the truss of FIG. 3, shown in a fully expanded position, according to the disclosure. FIG. 6 is a perspective view of still another one of many examples of a truss according to the disclosure, shown in a collapsed position. FIG. 7 is a perspective view of the truss of FIG. 6, shown in an expanded position, according to the disclosure. FIG. 8 is a perspective view of one of many examples of a telescoping member, according to the disclosure. FIG. 9 is a perspective view of the telescoping member of FIG. 8, shown in a locked position, according to the disclosure. FIG. 10 is a partially exploded view of the telescoping member of FIG. 9 according to the disclosure. FIG. 11 is a perspective view of the telescoping member of FIG. 10, with inner and outer sections of the telescoping member shown partially transparent to show a concentric lock according to the disclosure. FIG. 12 is a perspective view of the concentric lock of FIG. 11, shown in an extended position, according to the disclosure. FIG. 13 is a perspective view of the concentric lock of FIG. 11, shown in a compressed position, according to the disclosure. FIG. 14 is a perspective view of the concentric lock of FIG. 11, shown in a disengaged position, according to the disclosure. FIG. 15 is a cut-away perspective view of one of many examples of a telescoping member, according to the disclosure. FIG. 16 is a cut-away perspective view of a portion of the telescoping member of Fig. 15 according to the disclosure. FIG. 17 is a cut-away perspective view of another portion of the telescoping member of Fig. 15 according to the disclosure. FIG. 18 is a front elevation view of one of many examples of a concentric lock, shown in a compressed position, according to the disclosure. FIG. 19 is a cut-away side elevation view of the concentric lock of FIG. 18. FIG. 20 is a front elevation view of one of many examples of a concentric lock, shown in an extended position, according to the disclosure. FIG. 21 is a cut-away side elevation view of the concentric lock of FIG. 20. FIG. 22 is a cut-away side elevation view of a portion of one of many examples of a telescoping member, showing a concentric lock in an extended position, according to the disclosure. FIG. 23 is a cut-away perspective view of a concentric lock according to the disclosure. FIG. 24 is a perspective view of one of many examples of a concentric lock according to the disclosure, shown in an extended position. FIG. 25 is a perspective view of one of many examples of a concentric lock according to the disclosure, shown in a compressed position. FIG. 26 is a perspective view of one of many examples of a concentric lock according to the disclosure, shown in a disengaged position. FIG. 27 is a perspective view of one of many examples of a pin of the concentric lock of FIG. 25 according to the disclosure. FIG. 28 is a perspective view of one of many examples of a pin of the concentric lock of FIG. 26 shown in a disengaged position. FIG. 29 is a cut-away perspective view of the concentric lock of FIG. 25 according to the disclosure. FIG. 30 is a cut-away perspective view of the concentric lock of FIG. 26 shown in a disengaged position. FIG. 31 is a perspective view of one of many examples of a pin for a concentric lock according to the disclosure. FIG. 32 is a front elevation view of one of many examples of a pin for a concentric lock according to the disclosure. FIG. 33 is a perspective view of one of many examples of a key for a concentric lock according to the disclosure. FIG. 34 is a perspective view of one of many examples of an adjustable support system, shown in an expanded position, according to the disclosure. FIG. 35 is a perspective view of one of many examples of an adjustable support system, shown in a partially expanded position, according to the disclosure. FIG. 36 is a perspective view of one of many examples of an adjustable support system, shown in a collapsed position, according to the disclosure. FIG. 37 is a cut-away perspective view of one of many examples of a telescoping member according to the disclosure. FIG. 38 is a perspective view of one of many examples of a telescoping member, showing different mounting positions, according to the disclosure. FIG. 39 is a perspective view of another one of many examples of an adjustable support system according to the disclosure. FIG. 40 is a perspective view of still another one of many examples of an adjustable support system according to the disclosure. FIGS. 1-40 are described in conjunction with one another.

In at least one example, a collapsible support system 100 can include one or more support members, such as a first rigid support member 102 and a second rigid support member 104, and one or more locking mechanisms 106. In at least one example, the first rigid support member 102 can be disposed or positioned parallel to (i.e., at least substantially in parallel with) the second rigid support member 104. In at least one example, the first rigid support member 102 and/or the second rigid support member 104 can be or include a beam, and the system 100 can form a truss. In at least one example, one or both of the first rigid support member 102 and/or the second rigid support member 104 can be a truss, frame, or box structure, and the system 100 can form a stand, platform, or other support structure providing support in three dimensions.

In at least one example, the locking mechanism 106 can be configured to permit movement of the first rigid support member 102 with respect to the second rigid support member 104 (or vice versa) between or among a first position, a second position, a third position, and/or another position(s), which can be or include any position or number of positions according to an implementation of the disclosure. For example, in at least one example, the system 100 can have a fully collapsed position, a fully expanded position, and one or more intermediate positions, and the various components of the system 100 can have corresponding positions accordingly. As another example, in at least one example, the system 100 can be selectively adjusted and fixed in one or more dimensions, such as height, width and/or length. In this manner, a collapsible support system 100 according to the disclosure, such as the trusses illustrated in FIGS. 1-7 for exemplary purposes, can be stored and/or transported in a fully collapsed position or configuration, which can save space and increase efficiency during storage and transportation. Once on site, the truss can be selectively expanded into any desired position of a number of available positions among or between the fully collapsed position and a fully expanded position. Thus, the truss can be utilized in a variety of situations and can accommodate various and/or variable on-site conditions or requirements, thereby simplifying logistical, design, and engineering considerations.

In at least one example, the first rigid support member 102 can be adjacent to the second rigid support member 104 in a first (or other) position, as illustrated by, e.g., the nonlimiting examples of FIG. 2, FIG. 3, and FIG. 6. In at least one example, the first rigid support member 102 can be spaced apart from the second rigid support member 104 in a second (or other) position, as illustrated by, e.g., the nonlimiting examples of FIG. 1, FIG. 5, and FIG. 7. Similarly, FIG. 34, FIG. 35, and FIG. 36 provide nonlimiting examples of a first position, a second position, and a third position, respectively. Other possible examples of a first position, a second position and/or other positions can be or include any position or series of distinct positions according to an implementation of the disclosure. For instance, FIGS. 34-40 collectively illustrate how at least one example of the system 100 according to the disclosure can selectively accommodate and move among numerous different distinct positions in one or more directions. In at least one example, the first rigid support member 102 can be spaced farther from the second rigid support member 104 in the second position and/or third position than in the first position. In at least one example, the first rigid support member 102 can be spaced farther from the second rigid support member 104 in the third position than in the second position. In at least one example, the locking mechanism 106 can be configured to selectively lock the first and second rigid support members 102, 104 in any of numerous different positions, as required or desired in accordance with an implementation of the disclosure.

In at least one example, the locking mechanism 106 can include one or more locking telescoping members 120, such as a first locking telescoping member 120a and a second locking telescoping member 120b. In at least one example, the first locking telescoping member 120a can be orthogonal to (i.e., at least substantially perpendicular to) the second locking telescoping member 120b in the second position. In at least one example, the first locking telescoping member 120a can be angularly fixed with respect to the second locking telescoping member 120b, with the first and second rigid support members 102, 104 locked in the second position. In at least one example, the first locking telescoping member 120a can be angularly fixed at or about 90 degrees (i.e., at least about 90 degrees) with respect to the second locking telescoping member 120b, with the first and second rigid support members 102, 104 locked in the second position. In at least one example, the first locking telescoping member 120a can be angularly fixed at or about 75 degrees with respect to the second locking telescoping member 120b, with the first and second rigid support members 102, 104 locked in the second position. In at least one example, the first locking telescoping member 120a can be angularly fixed at or about 60 degrees with respect to the second locking telescoping member 120b, with the first and second rigid support members 102, 104 locked in the second position. In at least one example, the first locking telescoping member 120a can be angularly fixed at or about 45 degrees with respect to the second locking telescoping member 120b, with the first and second rigid support members 102, 104 locked in the second position. In at least one example, the first locking telescoping member 120a can be angularly fixed at between 45 and 90 degrees (inclusive) with respect to the second locking telescoping member 120b, with the first and second rigid support members 102, 104 locked in the second position.

In at least one example, any or each locking telescoping member(s) 120 can include an inner section 122, an outer section 124, and/or a concentric lock 140. In at least one example, the inner section 122 can be slideably mounted at least partially within the outer section 124. In at least one example, the inner section 122 telescopes within the outer section 124. In at least one example, any or each locking telescoping member(s) 120 can be a first length with the first and second rigid support members 102, 104 in the first position. In at least one example, any or each locking telescoping member(s) 120 can be a second length, longer than the first length, with the first and second rigid support members 102, 104 locked in the second position. In at least one example, any or each locking telescoping member(s) 120 can be a third length, longer than the second length, with the first and second rigid support members 102, 104 locked in a third position.

In at least one example, the first locking telescoping member 120a and/or the second locking telescoping member 120b can include a concentric lock 140. In at least one example, any or each concentric lock 140 can include an outer housing 142 fixedly mounted to an inner section 122 of the corresponding locking telescoping member 120 and an inner pin 144 slideably mounted within the outer housing 142. In at least one example, the inner pin 144 can be biased towards an extended position in which the inner pin 144 extends from the outer housing 142 and engages a hole 126 in an outer section 124 of the corresponding locking telescoping member 120, thereby locking the corresponding locking telescoping member 120 and preventing further telescoping thereof.

In at least one example, the inner pin 144 can be biased towards the extended position by a spring 146, which can be held within the outer housing 142 by a retaining ring 148. In at least one example, the inner pin 144 can slide longitudinally within the outer housing 142. For example, a protrusion 150, such as a set screw, can extend inwardly from the outer housing 142. In at least one example, the protrusion 150 can ride within a groove 152 in the inner pin 144 as the inner pin 144 slides longitudinally within the outer housing 142.

In at least one example, the inner pin 144 can be pushed into the outer housing 142 and rotated with respect thereto, such as by using a key 160, thereby locking the inner pin 144 at least partially within the outer housing 142 and permitting the corresponding locking telescoping member 120 to telescope freely. In at least one example, the inner pin 144 can include a periphery ledge 154. In at least one example, groove 152 of the inner pin 144 can extend into the periphery ledge 154. In at least one example, the inner pin 144 can be pushed into the outer housing 142 such that the groove 152 slides along the set screw 150, until the set screw 150 extends beyond the ledge 154. In at least one example, with the set screw 150 extending beyond the ledge 154, the inner pin 144 can be rotated with respect to the outer housing 142, such that the set screw 150 engages the ledge 154. In at least one example, the set screw 150 engaging the ledge 154 retains the inner pin 144 in a disengaged position, thereby permitting the locking telescoping member 120 to telescope freely.

In at least one example, the inner pin 144 can receive a bolt 130 therethrough. In at least one example, the bolt 130 can be secured with a nut 132 and/or a number of washers 134. In at least one example, the bolt 130 can ensure concentric lock 140 locks the inner section 122 with respect to the outer section 124, thereby locking the locking telescoping member 120 and preventing further telescoping thereof. In at least one example, the bolt 130 can reinforce the concentric lock 140, preventing the concentric lock 140 from disengaging or otherwise failing to lock the inner section 122 with respect to the outer section 124, thereby locking the locking telescoping member 120.

In at least one example, the outer housing 142 can be secured to the inner section 122 using one or more fasteners 156. In at least one example, the inner pin 144 can include one or more slots 158. In at least one example, the key 160 can include one or more blades 162 to engage the slots 158 in the inner pin 144, and by that engagement rotate the inner pin 144 as described therein.

In at least one example, the locking mechanism 106 can include a first locking telescoping member 120a and a second locking telescoping member 120b adjacent to a first end of the first and second rigid support members 102, 104. In at least one example, the locking mechanism 106 can include a third locking telescoping member 120c and a fourth locking telescoping member 120d adjacent to a second end of the first and second rigid support members 102, 104. In at least one example, in the second position, the first locking telescoping member 120a can be orthogonal to the second locking telescoping member 120b and/or the third locking telescoping member 120c can be orthogonal to the fourth locking telescoping member 120d.

In at least one example, any or each of the locking telescoping members 120 can include a concentric lock 140. In at least one example, each concentric lock 140 can include an outer housing 142 fixedly mounted to an inner section 122 of the corresponding locking telescoping member 120 and an inner pin 144 slideably mounted within the outer housing 142. In at least one example, the inner pin 144 can be biased towards an extended position in which the inner pin 144 extends from the outer housing 142 and engages a hole 126 in an outer section 124 of the corresponding locking telescoping member 120, thereby locking the corresponding locking telescoping member 120 and preventing further telescoping thereof. In at least one example, each inner pin 144 can be pushed into the corresponding outer housing 142 and rotated with respect thereto, thereby locking the inner pin 144 at least partially within the corresponding outer housing 142 and permitting the corresponding locking telescoping member 120 to telescope freely.

In at least one example, the inner pin 144 of the first locking telescoping member 120a and the inner pin 144 of the second locking telescoping member 120b can receive a bolt 130 therethrough, thereby locking the first and second rigid support members 102, 104 in the second position and/or rigidly fixing the first locking telescoping member 120a with respect to the second locking telescoping member 120b. In at least one example, the locking mechanism includes a plurality of crossing pairs of locking telescoping members 120. In at least one example, each crossing pair of the locking telescoping members 120 can receive a bolt 130 therethrough when the first and second rigid support members 102, 104 are in the second position, thereby locking the first and second rigid support members 102, 104 in the second position and/or rigidly fixing each crossing pair of the locking telescoping members 120. In at least one example, one or more crossing pair of the locking telescoping members 120 can include one or more concentric locks 140. In at least one example, each crossing pair of the locking telescoping members 120 can include one or more concentric locks 140.

In at least one example, the locking mechanism 106 can include an adjustment system 170 (e.g., one or more screw jacks, one or more scissor jacks, one or more hydraulic jacks, one or more rack and pinion mechanisms, one or more other jack or adjustment mechanisms, or any combination thereof), for adjusting and/or setting a distance between the first rigid support member 102 and the second rigid support member 104 and/or a position of one or more of the locking telescoping members 120. In at least one example, the adjustment system 170 can adjust the distance between the first rigid support member 102 and the second rigid support member 104 and/or the position of one or more crossing pairs of locking telescoping members 120 in a smooth, continuous manner, such that any relative spacing between the first rigid support member 102 and the second rigid support member 104 can be achieved (i.e., any desired position of a number of optional positions among or between a fully collapsed position and a fully expanded position). In at least one example, each crossing pair of the locking telescoping members 120 can receive a bolt 130 or other fastener or boss therein or therethrough when the first and second rigid support members 102, 104 are in the first position, the second position, the third position, or any other chosen position, thereby locking the first and second rigid support members 102, 104 in the chosen position and/or rigidly fixing into position each crossing pair of the locking telescoping members 120.

In at least one example, by allowing the first and second rigid support members 102, 104 to be locked in any position, a single support system 100 can be used in a variety of applications, thereby simplifying logistics and reducing costs. For instance, an example of system 100 that can accommodate multiple different dimensional implementations can provide for universal use among two or more physical applications calling for different system heights, widths and/or lengths, which can reduce inventory requirements (i.e., versus stocking numerous different models or sizes of the system 100).

In at least one example, the first and second rigid support members 102, 104, or either of them, can be or include a beam, tube, truss, box, and/or frame. For example, as shown in FIGS. 34-36 and 39-40 for illustrative purposes, in at least one example, one or both of the first and second rigid support members 102, 104 can be or include a quadrilateral structure with two end members 108 coupled to two lateral members 110. While the first and second rigid support members 102, 104 can be rectangular as illustrated in the exemplary figures mentioned above, that need not be the case, and the first and second rigid support members 102, 104 can be any shape required or desired in accordance with an implementation of the disclosure. Similarly, each of the end members 108 and lateral members 110 can have any cross-sectional size and shape required or desired in accordance with an implementation of the disclosure, such as L-channel, C-channel, square tubing, rectangular tubing, or otherwise, whether separately or in combination, in whole or in part.

In at least one example, the adjustment system 170 can include a plurality of actuation and/or support components for adjusting, setting and/or supporting a selected positioning of the first and second rigid support members 102, 104. For example, in at least one example, adjustment system 170 can include one or more cross members 174 for supporting positioning of the first and second rigid support members 102, 104 relative to one another, such as a first pair of cross members 174 coupled to the first and second rigid support members 102, 104 and a second pair of cross members 174 coupled to the first and second rigid support members 102, 104. In at least one example, each cross member 174 can have a first end rotateably coupled to a fixed support 176 on one of the first and second rigid support members 102, 104 and a second end rotateably and/or slideably coupled to one of the first and second rigid support members 102, 104. In this manner, movement of the cross members 174 can cause or result in corresponding movement of the first and second rigid support members 102, 104 and the locking telescoping members 120. In at least one example, adjustment system 170 can include one or more sliding supports 178 slideably coupled to a corresponding one of the first and second rigid support members 102, 104 for supporting movement of the first and second rigid support members 102, 104 relative to one another. For instance, in at least one example, one end of each cross member can be rotatably coupled to a sliding support 178, and each sliding support 178 can be slideably coupled to one or more corresponding guide members 180 coupled to one of the first and second rigid support members 102, 104.

In at least one example, the adjustment system 170 can include one or more actuation components for selectively moving the cross members 174 to thereby selectively position the first and second rigid support members 102, 104 and the locking telescoping members 120. For example, the adjustment system 170 can include one or more actuator members 184, such as a brace or other structural component, for supporting movement of one or more sliding supports 178, and one or more actuator drivers 186, such as a rod or other linkage or drive structure, for cooperating with and moving the one or more actuator members 184. In at least one example, the actuator member 184 can be coupled to a corresponding pair of sliding supports 178, such that the actuator member 184 and the corresponding sliding supports 178 move collectively or in unison, and the actuator driver 186 can be configured to slide or otherwise move the actuator member 184 and the corresponding sliding supports 178 relative to the first and second rigid support members 102, 104, such as longitudinally along a pair of guide members 180. As shown in FIGS. 34-36 and 39-40 for illustrative purposes, in at least one example, the actuator driver 186 can be or include a feedscrew rotateably coupled to a corresponding one of the first and second rigid support members 102, 104 and threadably coupled to a mating opening of actuator member 184, such that rotation of the feedscrew causes linear movement of the actuator member 184 and the corresponding sliding supports 178 relative to the first and second rigid support members 102, 104, and thus causes corresponding expanding or collapsing movement of the system 100 (i.e., depending on the direction of rotation of the feedscrew). However, this is but one example of many, and other actuation mechanisms are possible, such as via the implementation of linear actuators, chain drives, belt drives, gear drives and/or other types of actuation mechanisms capable of selectively adjusting the positioning of system 100 according to the disclosure.

In at least one example, the adjustment system 170 can be manual or manually operated. For example, the actuator driver 186 can be arranged for manual manipulation by a user or installer, such as by way of a ratchet, breakover bar, drill and/or other hand tools for operating the actuator driver 186 in accordance with an implementation at hand (e.g., rotating the actuator driver 186 in an implementation having a feedscrew). As another example, in at least one example, the adjustment system 170 can be wholly or partially automated and/or motorized, and can include an actuator 172. The actuator 172 can be or include any type of prime mover and/or associated linkage for controlling movement of one or more components of the adjustment system 170, as required or desired for an implementation of the disclosure.

For example, as shown in FIG. 39 for illustrative purposes, in at least one example, the actuator 172 can be or include a motor operably coupled to the actuator driver 186. In the aforementioned manners, the actuator 172 can be used to change or adjust the distance between or relative positioning of the first and second rigid support members 102, 104. In at least one example, the actuator 172 can be removably coupled to the actuator driver 186 and/or one or more other components of the system 100, such that, once a given implementation of the disclosure is put in place and adjusted accordingly, the actuator 172 can be removed and, for instance, utilized with another implementation of support system 100. As another example, in at least one example, the actuator 172 can remain coupled to the remainder of the system 100 during use of the system 100, e.g., in implementations of the system 100 where adjustment or repositioning of the first and second rigid support members 102, 104 may be desired periodically or otherwise from time to time.

In at least one example, the locking mechanism 106 can include one or more crossing pairs of locking telescoping members 120. In at least one example, the locking mechanism 106 can include one or more angularly mounted locking telescoping members 120. In at least one example, the locking mechanism 106 can include one or more horizontally mounted locking telescoping members 120. In at least one example, the locking mechanism 106 can include one or more vertically mounted locking telescoping members 120. In at least one example, the locking mechanism 106 can include one or more locking telescoping members 120 having a concentric lock 140 and/or bolt 130 to secure the first and second rigid support members 102, 104 in any chosen available position and/or rigidly fix the locking telescoping members 120.

In at least one example, each locking telescoping member 120 can include a concentric lock 140. In at least one example, each concentric lock 140 can include an outer housing 142 fixedly mounted to an inner section 122 of the corresponding locking telescoping member 120 and an inner pin 144 slideably mounted within the outer housing 142. In at least one example, the inner pin 144 can be biased towards an extended position in which the inner pin 144 extends from the outer housing 142 and engages a hole 126 in an outer section 124 of the corresponding locking telescoping member 120, thereby locking the corresponding locking telescoping member 120 and preventing further telescoping thereof. In at least one example, each inner pin 144 can be pushed into the corresponding outer housing 142 and rotated with respect thereto, thereby locking the inner pin 144 at least partially within the corresponding outer housing 142 and permitting the corresponding locking telescoping member 120 to telescope freely.

In at least one example, a first crossing pair of locking telescoping members 120 can include a first locking telescoping member 120a and a second locking telescoping member 120b. In at least one example, the inner pin 144 of the first locking telescoping member 120a and the inner pin 144 of the second locking telescoping member 120b can align and/or receive a bolt 130 therethrough, such as when the first and second rigid support members 102, 104 are in the second position, thereby locking the first and second rigid support members 102, 104 in the second position and/or rigidly fixing the first locking telescoping member 120a with respect to the second locking telescoping member 120b.

In at least one example, a second crossing pair of locking telescoping members 120 can include a third locking telescoping member 120c and a fourth locking telescoping member 120d. In at least one example, the inner pin 144 of the third locking telescoping member 120c and the inner pin 144 of the fourth locking telescoping member 120d can align and/or receive another bolt 130 therethrough, such as when the first and second rigid support members 102, 104 are in the second position, thereby locking the first and second rigid support members 102, 104 in the second position and/or rigidly fixing the third locking telescoping member 120c with respect to the fourth locking telescoping member 120d.

In at least one example, the locking mechanism 106 can be configured to lock the first and second rigid support members 102, 104 in the first position and/or multiple positions. For example, in at least one example, the locking mechanism 106 can be configured to lock the first and second rigid support members 102, 104 in a third position, in which the first rigid support member 102 can be spaced farther from the second rigid support member 104 than in the second position.

In at least one example, a collapsible support system can include a first rigid support member, a second rigid support member, which can be parallel to the first rigid support member, and a locking mechanism. In at least one example, the first rigid support member can be a first beam and/or the second rigid support member can be a second beam. In at least one example, the first rigid support member can be a first truss and/or the second rigid support member can be a second truss. In at least one example, the locking mechanism can be configured to permit movement of the first rigid support member with respect to the second rigid support member between a first position and a second position. In at least one example, the first rigid support member can be spaced farther from the second rigid support member in the second position than in the first position. In at least one example, the locking mechanism can also be configured to lock the first and second rigid support members in the second position. In at least one example, the locking mechanism can lock the first and second rigid support members in one or more other positions, such as one or more positions between the first position and the second position. In at least one example, the locking mechanism can lock the first and second rigid support members in any of a range of distinct available positions between the first position and the second position.

In at least one example, the locking mechanism can include a first locking telescoping member and a second locking telescoping member. In at least one example, the first locking telescoping member can be orthogonal to the second locking telescoping member in the second position.

In at least one example, the first locking telescoping member can include a first concentric lock. In at least one example, the second locking telescoping member can include a second concentric lock. In at least one example, either or both concentric lock(s) can include an outer housing fixedly mounted to an inner section of the corresponding locking telescoping member and an inner pin slideably mounted within the outer housing. In at least one example, the inner pin can be biased towards an extended position in which the inner pin extends from the outer housing and engages a hole in an outer section of the corresponding locking telescoping member, thereby locking the corresponding locking telescoping member and preventing further telescoping thereof. In at least one example, the inner pin can be pushed into the outer housing and rotated with respect thereto, thereby locking the inner pin within the outer housing and permitting the corresponding locking telescoping member to telescope freely. In at least one example, the inner pin can receive a bolt therethrough.

In at least one example, the locking mechanism can include a first locking telescoping member and a second locking telescoping member adjacent to a first end of the first and second rigid support members. In at least one example, the locking mechanism can include a third locking telescoping member and a fourth locking telescoping member adjacent to a second end of the first and second rigid support members. In at least one example, in the second position, the first locking telescoping member can be orthogonal to the second locking telescoping member and/or the third locking telescoping member can be orthogonal to the fourth locking telescoping member.

In at least one example, any or each of the locking telescoping members can include a concentric lock. In at least one example, each concentric lock can include an outer housing fixedly mounted to an inner section of the corresponding locking telescoping member and an inner pin slideably mounted within the outer housing. In at least one example, the inner pin can be biased towards an extended position in which the inner pin extends from the outer housing and engages a hole in an outer section of the corresponding locking telescoping member, thereby locking the corresponding locking telescoping member and preventing further telescoping thereof. In at least one example, each inner pin can be pushed into the corresponding outer housing and rotated with respect thereto, thereby locking the inner pin within the corresponding outer housing and permitting the corresponding locking telescoping member to telescope freely.

In at least one example, the inner pin of the first locking telescoping member and the inner pin of the second locking telescoping member can receive a first bolt therethrough, thereby locking the first and second rigid support members in the second position and/or rigidly fixing the first locking telescoping member with respect to the second locking telescoping member. In at least one example, the locking mechanism includes a plurality of crossing pairs of locking telescoping members. In at least one example, each crossing pair of the locking telescoping members can receive a bolt therethrough when the first and second rigid support members are in the second position, thereby locking the first and second rigid support members in the second position and/or rigidly fixing each crossing pair of the locking telescoping members.

In at least one example, the locking mechanism can include an adjustment system, such as one or more screw jacks, one or more scissor jacks, one or more hydraulic jacks, one or more rack and pinion mechanisms, one or more other jack or adjustment mechanisms, or any combination thereof, configured to adjust a distance between the first rigid support member and the second rigid support member and/or one or more crossing pairs of locking telescoping members. In at least one example, each crossing pair of the locking telescoping members can receive a bolt therethrough when the first and second rigid support members are in the second position, thereby locking the first and second rigid support members in the second position and/or rigidly fixing each crossing pair of the locking telescoping members.

In at least one example, each locking telescoping member can include a concentric lock. In at least one example, each concentric lock can include an outer housing fixedly mounted to an inner section of the corresponding locking telescoping member and an inner pin slideably mounted within the outer housing. In at least one example, the inner pin can be biased towards an extended position in which the inner pin extends from the outer housing and engages a hole in an outer section of the corresponding locking telescoping member, thereby locking the corresponding locking telescoping member and preventing further telescoping thereof. In at least one example, each inner pin can be pushed into the corresponding outer housing and rotated with respect thereto, thereby locking the inner pin within the corresponding outer housing and permitting the corresponding locking telescoping member to telescope freely.

In at least one example, a first crossing pair of locking telescoping members can include a first locking telescoping member and a second locking telescoping member. In at least one example, the inner pin of the first locking telescoping member and the inner pin of the second locking telescoping member can align and/or receive a first bolt therethrough, such as when the first and second rigid support members are in the second position, thereby locking the first and second rigid support members in the second position and/or rigidly fixing the first locking telescoping member with respect to the second locking telescoping member.

In at least one example, the locking mechanism can be configured to lock the first and second rigid support members in the first position and/or multiple positions. For example, in at least one example, the locking mechanism can be configured to lock the first and second rigid support members in a third position, in which the first rigid support member can be spaced farther from the second rigid support member than in the second position.

In at least one example, the system can include a first pair of locking telescoping members coupled to first ends of the first and second rigid support members, and a second pair of locking telescoping members coupled to second ends of the first and second rigid support members. In at least one example, each of the locking telescoping members can be configured to be selectively locked at a plurality of different lengths, thereby selectively limiting a maximum distance between the first and second rigid support members. In at least one example, each of the locking telescoping members can be configured to be selectively locked at a plurality of different lengths, thereby allowing a user to choose among a plurality of different system dimensional arrangements, such as heights and widths. In at least one example, each of the locking telescoping members can include an end fixedly attached to the first rigid support member and another end fixedly attached to the second rigid support member.

In at least one example, each of the locking telescoping members can include an end rotateably attached to the first rigid support member and another end rotateably attached to the second rigid support member. In at least one example, the first pair of locking telescoping members can be rotateably coupled to one another and the second pair of locking telescoping members can be rotateably coupled to one another, such as at positions between the first and second rigid support members. In at least one example, the locking mechanism and the first and second pairs of locking telescoping members can be collectively configured to enable selective adjustment and locking of the system among a plurality of different dimensional combinations, which can include heights, widths, and/or lengths. In at least one example, the locking mechanism, which can include one or more pairs of locking telescoping members, or any portions thereof, can be collectively configured to enable selective adjustment and locking of the system among any of a plurality of different dimensional combinations, which can include heights, widths, and/or lengths. In at least one example, the locking mechanism and/or the pairs of locking telescoping members can be collectively configured to enable selective adjustment and locking of the system among any of a plurality of different configurations having varying distances between the first and second rigid support members.

In at least one example, the system can include an adjustment system having one or more cross members for supporting positioning of the first and second rigid support members, such as a first pair of cross members coupled to the first and second rigid support members and a second pair of cross members coupled to the first and second rigid support members. In at least one example, each cross member can have an end rotateably coupled to a fixed support on one of the first and second rigid support members and another end rotateably and/or slideably coupled to one of the first and second rigid support members. In at least one example, movement of the cross members can cause or result in corresponding movement of one or more other system components, such as the first and second rigid support members and the locking telescoping members. In at least one example, the adjustment system can include one or more sliding supports slideably coupled to a corresponding one of the first and second rigid support members. In at least one example, one end of each cross member can be rotatably coupled to a sliding support, and each sliding support can be slideably coupled to one or more corresponding guide members coupled to one of the first and second rigid support members. In at least one example, one end of each of the cross members can be slideably coupled to one of the first and second rigid support members. In at least one example, the first pair of cross members can be rotateably coupled to one another and the second pair of cross members can be rotateably coupled to one another, such as at positions between the first and second rigid support members.

In at least one example, the system can include a first pair of sliding supports slideably coupled to the first rigid support member, and a second pair of sliding supports slideably coupled to the second rigid support member. In at least one example, an end of each of the cross members can be rotateably coupled to corresponding ones of the sliding supports. In at least one example, the system can include a first pair of guide members coupled to the first rigid support member, and a second pair of guide members coupled to the second rigid support member. Respective ones of the first pair of sliding supports can be slideably coupled to corresponding ones of the first pair of guide members, and respective ones of the second pair of sliding supports can be slideably coupled to corresponding ones of the second pair of guide members.

In at least one example, the system can include an actuator member coupled to a pair of sliding supports and configured to slide relative to a pair of guide members in unison with the sliding supports. In at least one example, an actuator driver can be configured to selectively move the actuator member for causing a change of position of at least one of the first and second rigid support members. In at least one example, the actuator driver can be a feedscrew, and the feedscrew can be rotateably coupled to one or more of the rigid support members and threadably coupled to the actuator member. In at least one example, the system can include an actuator coupled to the actuator driver and configured to selectively move the actuator driver for causing a change of position of the actuator member. In at least one example, the actuator can be or include a motor. In at least one example, the actuator can be removably coupled to one or more other system components.

Other and further examples utilizing one or more aspects of the disclosure can be devised without departing from the Applicant's disclosure. For example, the devices, systems and methods can be implemented for numerous different types and sizes in numerous different industries. Further, the various methods and examples of the devices, systems and methods can be included in combination with each other to produce variations of the disclosed methods and examples. Discussion of singular elements can include plural elements and vice versa. The order of steps can occur in a variety of sequences unless otherwise specifically limited. The various steps described herein can be combined with other steps, interlineated with the stated steps, and/or split into multiple steps. Similarly, elements have been described functionally and can be embodied as separate components or can be combined into components having multiple functions.

The examples have been described in the context of preferred and other examples and not every example has been described. Obvious modifications and alterations to the described examples are available to those of ordinary skill in the art having the benefits of the present disclosure.

## Claims

1. A collapsible support system (100) comprising:
a first rigid support member (102);
a second rigid support member (104) parallel to the first rigid support member; and
a locking mechanism (106) configured to permit movement of the first rigid support member with respect to the second rigid support member between a first position and a second position wherein the first rigid support member is spaced farther from the second rigid support member than in the first position;
wherein the locking mechanism is further configured to lock the first and second rigid support members in the second position;
**characterized in that** the locking mechanism includes a first crossing pair of locking telescoping members (120) and a second crossing pair of locking telescoping members (120);
wherein each crossing pair of the locking telescoping members is configured to receive a bolt (130) therethrough when the first and second rigid support members are in the second position, thereby rigidly fixing each crossing pair of the locking telescoping members;
wherein each locking telescoping member includes a concentric lock; wherein each concentric lock (140) comprises an outer housing (142) fixedly mounted to an inner section of the corresponding locking telescoping member and an inner pin (144) slideably mounted within the outer housing;
wherein the inner pin is biased towards an extended position in which the inner pin extends from the outer housing and engages a hole in an outer section of the corresponding locking telescoping member, thereby locking the corresponding locking telescoping member and preventing further telescoping thereof; and wherein each inner pin is configured to be pushed into the corresponding outer housing and rotated with respect thereto, thereby locking the inner pin within the corresponding outer housing and permitting the corresponding locking telescoping member to telescope freely.

2. The system of claim 1, wherein the first crossing pair of locking telescoping members includes a first locking telescoping member and a second locking telescoping member adjacent to a first end of the first and second rigid support members; and the second crossing pair of locking telescoping members includes a third locking telescoping member and a fourth locking telescoping member adjacent to a second end of the first and second rigid support members; and wherein the first locking telescoping member is orthogonal to the second locking telescoping member and the third locking telescoping member is orthogonal to the fourth locking telescoping member in the second position.

3. The system of claim 2, wherein the first locking telescoping member includes a first concentric lock, the second locking telescoping member includes a second concentric lock, the third locking telescoping member includes a third concentric lock, and the fourth locking telescoping member includes a fourth concentric lock; wherein each concentric lock comprises an outer housing fixedly mounted to an inner section of the corresponding locking telescoping member and an inner pin slideably mounted within the outer housing; and wherein the inner pin is biased towards an extended position in which the inner pin extends from the outer housing and engages a hole in an outer section of the corresponding locking telescoping member, thereby locking the corresponding locking telescoping member and preventing further telescoping thereof.

4. The system of claim 3, wherein each inner pin is configured to be pushed into the corresponding outer housing and rotated with respect thereto, thereby locking the inner pin within the corresponding outer housing and permitting the corresponding locking telescoping member to telescope freely.

5. The system of claim 3, wherein the inner pin of the first locking telescoping member and the inner pin of the second locking telescoping member are configured to receive a first bolt therethrough, thereby locking the first and second rigid support members in the second position and rigidly fixing the first locking telescoping member with respect to the second locking telescoping member.

6. The system of any one of the preceding claims, wherein the locking mechanism includes
a first pair of locking telescoping members coupled to first ends of the first and second rigid support members; and
a second pair of locking telescoping members coupled to second ends of the first and second rigid support members;
wherein each of the locking telescoping members is configured to be selectively locked at a plurality of different lengths, thereby selectively limiting a maximum distance between the first and second rigid support members.

7. The system of claim 6, further comprising
a first pair of cross members coupled to the first and second rigid support members; and
a second pair of cross members coupled to the first and second rigid support members;
a first pair of sliding supports slideably coupled to the first rigid support member; and
a second pair of sliding supports slideably coupled to the second rigid support member;
wherein each cross member has a first end rotateably coupled to a fixed support on one of the first and second rigid support members; and
wherein the second ends of the cross members are rotateably coupled to corresponding ones of the sliding supports.

8. The system of claim 1, further comprising
a first pair of guide members coupled to the first rigid support member; and
a second pair of guide members coupled to the second rigid support member;
wherein respective ones of the first pair of sliding supports are slideably coupled to corresponding ones of the first pair of guide members; and
wherein respective ones of the second pair of sliding supports are slideably coupled to corresponding ones of the second pair of guide members.

9. The system of claim 8, further comprising
an actuator member coupled to the second pair of sliding supports and configured to slide relative to the second pair of guide members in unison with the second pair of sliding supports; and
an actuator driver configured to selectively move the actuator member for causing a change of position of at least one of the first and second rigid support members; and optionally
wherein the actuator driver is a feedscrew, and wherein the feedscrew is rotateably coupled to the second rigid support member and threadably coupled to the actuator member; and optionally
further comprising a motor configured to selectively turn the feedscrew.

10. The system of any one of claims 6-9, wherein each of the locking telescoping members has a first end fixedly attached to the first rigid support member and a second end fixedly attached to the second rigid support member; or optionally
wherein each of the locking telescoping members has a first end rotateably attached to the first rigid support member and a second end rotateably attached to the second rigid support member; or optionally
wherein the first pair of locking telescoping members are rotateably coupled to one another and wherein the second pair of locking telescoping members are rotateably coupled to one another; or optionally
wherein the first and second pairs of locking telescoping members are collectively configured to enable selective adjustment and locking of the system at any one of a plurality of different distances between the first and second rigid support members.

11. The system of claim 1, wherein the first pair of cross members are rotateably coupled to one another and wherein the second pair of cross members are rotateably coupled to one another.

## Patentansprüche

1. Zusammenklappbares Stützsystem (100), umfassend:
ein erstes starres Stützglied (102),
ein parallel zu dem ersten starren Stützglied angeordnetes zweites starres Stützglied (104) und
einen Verriegelungsmechanismus (106), der dazu ausgestaltet ist, eine Bewegung des ersten starren Stützglieds bezüglich des zweiten starren Stützglieds zwischen einer ersten Position und einer zweiten Position zu gestatten, in der das erste starre Stützglied weiter von dem zweiten starren Stützglied beabstandet ist als in der ersten Position,
wobei der Verriegelungsmechanismus ferner dazu ausgestaltet ist, das erste und das zweite starre Stützglied in der zweiten Position zu verriegeln,
**dadurch gekennzeichnet, dass**
der Verriegelungsmechanismus ein erstes sich kreuzendes Paar verriegelnder Teleskopglieder (120) und ein zweites sich kreuzendes Paar verriegelnder Teleskopglieder (120) aufweist,
wobei jedes sich kreuzende Paar der verriegelnden Teleskopglieder dazu ausgestaltet ist, einen Bolzen (130) dort hindurch aufzunehmen, wenn das erste und das zweite starre Stützglied in der zweiten Position sind, wodurch jedes sich kreuzende Paar der verriegelnden Teleskopglieder starr fixiert wird,
wobei jedes verriegelnde Teleskopglied eine konzentrische Verriegelung aufweist, wobei jede konzentrische Verriegelung (140) ein äußeres Gehäuse (142), das fest an einem inneren Abschnitt des entsprechenden verriegelnden Teleskopglieds montiert ist, und einen inneren Stift (144), der verschiebbar in dem äußeres Gehäuse montiert ist, umfasst,
wobei der innere Stift zu einer ausgefahrenen Position hin vorgespannt ist, in der sich der innere Stift von dem äußeren Gehäuse erstreckt und ein Loch in einem äußeren Abschnitt des entsprechenden verriegelnden Teleskopglieds in Eingriff nimmt, wodurch das entsprechende verriegelnde Teleskopglied verriegelt und ein weiteres Teleskopieren davon verhindert wird, und wobei jeder innere Stift dazu ausgestaltet ist, in das entsprechende äußere Gehäuse eingeschoben und bezüglich dessen gedreht zu werden, wodurch der innere Stift in dem entsprechenden äußeren Gehäuse verriegelt wird und das freie Teleskopieren des entsprechenden verriegelnden Teleskopglieds gestattet ist.

2. System nach Anspruch 1, wobei das erste sich kreuzende Paar verriegelnder Teleskopglieder ein erstes verriegelndes Teleskopglied und ein zweites verriegelndes Teleskopglied angrenzend an ein erstes Ende des ersten und des zweiten starren Stützglieds aufweist, und das zweite sich kreuzende Paar verriegelnder Teleskopglieder ein drittes verriegelndes Teleskopglied und ein viertes verriegelndes Teleskopglied angrenzend an ein zweites Ende des ersten und des zweiten starren Stützglieds aufweist, und wobei das erste verriegelnde Teleskopglied orthogonal zu dem zweiten verriegelnden Teleskopglied verläuft und das dritte verriegelnde Teleskopglied orthogonal zu dem vierten verriegelnden Teleskopglied in der zweiten Position verläuft.

3. System nach Anspruch 2, wobei das erste verriegelnde Teleskopglied eine erste konzentrische Verriegelung aufweist, das zweite verriegelnde Teleskopglied eine zweite konzentrische Verriegelung aufweist, das dritte verriegelnde Teleskopglied eine dritte konzentrische Verriegelung aufweist und das vierte verriegelnde Teleskopglied eine vierte konzentrische Verriegelung aufweist, wobei jede konzentrische Verriegelung ein äußeres Gehäuse aufweist, das fest an einem inneren Abschnitt des entsprechenden verriegelnden Teleskopglieds montiert ist, sowie einen inneren Stift, der verschiebbar in dem äußeren Gehäuse montiert ist, und wobei der innere Stift zu einer ausgefahrenen Position hin vorgespannt ist, in der sich der innere Stift von dem äußeren Gehäuse erstreckt und ein Loch in einem äußeren Abschnitt des entsprechenden verriegelnden Teleskopglieds in Eingriff nimmt, wodurch das entsprechende verriegelnde Teleskopglied verriegelt und dessen weiteres Teleskopieren verhindert wird.

4. System nach Anspruch 3, wobei jeder innere Stift dazu ausgestaltet ist, in das entsprechende äußere Gehäuse eingeschoben und bezüglich dessen gedreht zu werden, wodurch der innere Stift in dem entsprechenden äußeren Gehäuse verriegelt wird und das freie Teleskopieren des entsprechenden verriegelnden Teleskopglieds gestattet ist.

5. System nach Anspruch 3, wobei der innere Stift des ersten verriegelnden Teleskopglieds und der innere Stift des zweiten verriegelnden Teleskopglieds dazu ausgestaltet sind, einen ersten Bolzen dort hindurch aufzunehmen, wodurch das erste und das zweite starre Stützglied in der zweiten Position verriegelt werden und das erste verriegelnde Teleskopglied bezüglich des zweiten verriegelnden Teleskopglieds starr fixiert wird.

6. System nach einem der vorhergehenden Ansprüche, wobei der Verriegelungsmechanismus Folgendes aufweist:
ein erstes Paar verriegelnder Teleskopglieder, die an erste Enden des ersten und des zweiten starren Stützglieds gekoppelt sind, und
ein zweites Paar verriegelnder Teleskopglieder, die an zweite Enden des ersten und des zweiten starren Stützglieds gekoppelt sind,
wobei jedes der verriegelnden Teleskopglieder dazu ausgestaltet ist, gezielt in einer Vielzahl von unterschiedlichen Längen verriegelt zu werden, wodurch ein maximaler Abstand zwischen dem ersten und dem zweiten starren Stützglied gezielt begrenzt wird.

7. System nach Anspruch 6, ferner umfassend:
ein erstes Paar Querverstrebungen, die an das erste und das zweite starre Stützglied gekoppelt sind, und
ein zweites Paar Querverstrebungen, die an das erste und das zweite starre Stützglied gekoppelt sind,
ein erstes Paar Gleitstützen, die verschiebbar an das erste starre Stützglied gekoppelt sind, und
ein zweites Paar Gleitstützen, die verschiebbar an das zweite starre Stützglied gekoppelt sind,
wobei jede Querverstrebung ein erstes Ende aufweist, das drehbar an eine feststehende Stütze an dem ersten oder dem zweiten starren Stützglied gekoppelt ist, und
wobei die zweiten Enden der Querverstrebungen drehbar an entsprechende der Gleitstützen gekoppelt sind.

8. System nach Anspruch 1, ferner umfassend:
ein an das erste starre Stützglied gekoppeltes erstes Paar Führungsglieder und
ein an das zweite starre Stützglied gekoppeltes zweites Paar Führungsglieder,
wobei jeweilige des ersten Paars Gleitstützen verschiebbar an entsprechende des ersten Paars Führungsglieder gekoppelt sind und
wobei jeweilige des zweiten Paars Gleitstützen verschiebbar an entsprechende des zweiten Paars Führungsglieder gekoppelt sind.

9. System nach Anspruch 8, ferner umfassend:
ein Aktuatorglied, das an das zweite Paar Gleitstützen gekoppelt und dazu ausgestaltet ist, synchron mit dem zweiten Paar Gleitstützen bezüglich des zweiten Paars Führungsglieder zu gleiten, und
einen Aktuatortreiber, der dazu ausgestaltet ist, das Aktuatorglied gezielt zu bewegen, um eine Positionsänderung mindestens eines des ersten und des zweiten starren Stützglieds zu veranlassen, und optional wobei der Aktuatortreiber eine Vorschubschraube ist und wobei die Vorschubschraube drehbar an das zweite starre Stützglied gekoppelt und schraubbar an das Aktuatorglied gekoppelt ist, und optional
ferner umfassend einen Motor, der zum gezielten Drehen der Vorschubschraube ausgestaltet ist.

10. System nach einem der Ansprüche 6 - 9, wobei jedes der verriegelnden Teleskopglieder ein erstes Ende, das fest an dem ersten starren Stützglied angebracht ist, und ein zweites Ende, das fest an dem zweiten starren Stützglied angebracht ist, aufweist, oder optional
wobei jedes der verriegelnden Teleskopglieder ein erstes Ende, das drehbar an dem ersten starren Stützglied angebracht ist, und ein zweites Ende, das drehbar an dem zweiten starren Stützglied angebracht ist, aufweist, oder optional
wobei das erste Paar verriegelnder Teleskopglieder drehbar aneinander gekoppelt ist und wobei das zweite Paar verriegelnder Teleskopglieder drehbar aneinander gekoppelt ist, oder optional
wobei das erste und das zweite Paar verriegelnder Teleskopglieder gemeinsam dazu ausgestaltet sind, ein gezieltes Verstellen und Verriegeln des Systems in einem beliebigen einer Vielzahl von unterschiedlichen Abständen zwischen dem ersten und dem zweiten starren Stützglied zu ermöglichen.

11. System nach Anspruch 1, wobei das erste Paar Querverstrebungen drehbar aneinander gekoppelt ist und wobei das zweite Paar Querverstrebungen drehbar aneinander gekoppelt ist.

## Revendications

1. Système de support pliable (100) comprenant :
un premier élément de support rigide (102) ;
un second élément de support rigide (104) parallèle au premier élément de support rigide ; et
un mécanisme de verrouillage (106) conçu pour permettre un mouvement du premier élément de support rigide par rapport au second élément de support rigide entre une première position et une seconde position dans laquelle le premier élément de support rigide est plus espacé du second élément de support rigide que dans la première position ;
le mécanisme de verrouillage étant conçu en outre pour verrouiller les premier et second éléments de support rigides dans la seconde position ;
**caractérisé en ce que**
le mécanisme de verrouillage comprend une première paire croisée d'éléments télescopiques de verrouillage (120) et une seconde paire croisée d'éléments télescopiques de verrouillage (120) ;
chaque paire croisée des éléments télescopiques de verrouillage étant conçue pour recevoir un boulon (130) à travers celle-ci lorsque les premier et second éléments de support rigides se trouvent dans la seconde position, fixant ainsi rigidement chaque paire croisée des éléments télescopiques de verrouillage ;
chaque élément télescopique de verrouillage comprenant un verrou concentrique ; chaque verrou concentrique (140) comprenant un boîtier externe (142) monté à demeure sur une section interne de l'élément télescopique de verrouillage correspondant et une broche interne (144) montée coulissante à l'intérieur du boîtier externe ;
la broche interne étant sollicitée vers une position étendue dans laquelle la broche interne s'étend à partir du boîtier externe et vient en prise avec un trou dans une section externe de l'élément télescopique de verrouillage correspondant, verrouillant ainsi l'élément télescopique de verrouillage correspondant et empêchant tout mouvement télescopique supplémentaire de celui-ci ;
et chaque broche interne étant conçue pour être poussée dans le boîtier externe correspondant et tourner par rapport à celui-ci, verrouillant ainsi la broche interne à l'intérieur du boîtier externe correspondant et permettant à l'élément télescopique de verrouillage correspondant d'effectuer librement un mouvement télescopique.

2. Système selon la revendication 1, la première paire croisée d'éléments télescopiques de verrouillage comprenant un premier élément télescopique de verrouillage et un deuxième élément télescopique de verrouillage adjacent à une première extrémité des premier et second éléments de support rigides ; et la seconde paire croisée d'éléments télescopiques de verrouillage comprenant un troisième élément télescopique de verrouillage et un quatrième élément télescopique de verrouillage adjacent à une seconde extrémité des premier et second éléments de support rigides ; et le premier élément télescopique de verrouillage étant orthogonal au deuxième élément télescopique de verrouillage et le troisième élément télescopique de verrouillage étant orthogonal au quatrième élément télescopique de verrouillage dans la seconde position.

3. Système selon la revendication 2, le premier élément télescopique de verrouillage comprenant un premier verrou concentrique, le deuxième élément télescopique de verrouillage comprenant un deuxième verrou concentrique, le troisième élément télescopique de verrouillage comprenant un troisième verrou concentrique, et le quatrième élément télescopique de verrouillage comprenant un quatrième verrou concentrique ; chaque verrou concentrique comprenant un boîtier externe monté à demeure sur une section interne de l'élément télescopique de verrouillage correspondant et une broche interne montée coulissante à l'intérieur du boîtier externe ; et la broche interne étant sollicitée vers une position étendue dans laquelle la broche interne s'étend à partir du boîtier externe et vient en prise avec un trou dans une section externe de l'élément télescopique de verrouillage correspondant, verrouillant ainsi l'élément télescopique de verrouillage correspondant et l'empêchant d'effectuer un mouvement télescopique supplémentaire.

4. Système selon la revendication 3, chaque broche interne étant conçue pour être poussée dans le boîtier externe correspondant et tournée par rapport à celui-ci, verrouillant ainsi la broche interne à l'intérieur du boîtier externe correspondant et permettant à l'élément télescopique de verrouillage correspondant d'effectuer librement un mouvement télescopique.

5. Système selon la revendication 3, la broche interne du premier élément télescopique de verrouillage et la broche interne du deuxième élément télescopique de verrouillage étant conçues pour recevoir un premier boulon à travers celles-ci, verrouillant ainsi les premier et second éléments de support rigides dans la seconde position et fixant rigidement le premier élément télescopique de verrouillage par rapport au deuxième élément télescopique de verrouillage.

6. Système selon l'une quelconque des revendications précédentes, le mécanisme de verrouillage comprenant
une première paire d'éléments télescopiques de verrouillage accouplés aux premières extrémités des premier et second éléments de support rigides ; et
une seconde paire d'éléments télescopiques de verrouillage accouplés aux secondes extrémités des premier et second éléments de support rigides ;
chacun des éléments télescopiques de verrouillage étant conçu pour être sélectivement verrouillé au niveau d'une pluralité de longueurs différentes, limitant ainsi sélectivement une distance maximale entre les premier et second éléments de support rigides.

7. Système selon la revendication 6, comprenant en outre
une première paire d'éléments transversaux accouplés aux premier et second éléments de support rigides ; et
une seconde paire d'éléments transversaux accouplés aux premier et second éléments de support rigides ;
une première paire de supports coulissants accouplés coulissants au premier élément de support rigide ; et
une seconde paire de supports coulissants accouplés coulissants au second élément de support rigide ;
chaque élément transversal ayant une première extrémité accouplée rotative à un support fixe sur l'un parmi les premier et second éléments de support rigides ; et
les secondes extrémités des éléments transversaux étant accouplées rotatives aux supports correspondants parmi les supports coulissants.

8. Système selon la revendication 1, comprenant en outre
une première paire d'éléments de guidage accouplés au premier élément de support rigide ; et
une seconde paire d'éléments de guidage accouplés au second élément de support rigide ;
des supports respectifs parmi la première paire de supports coulissants étant accouplés coulissants à des supports correspondants parmi la première paire d'éléments de guidage ; et
des supports respectifs parmi la seconde paire de supports coulissants étant accouplés coulissants à des supports correspondants de la seconde paire d'éléments de guidage.

9. Système selon la revendication 8, comprenant en outre
un élément actionneur accouplé à la seconde paire de supports coulissants et conçu pour coulisser par rapport à la seconde paire d'éléments de guidage en même temps que la seconde paire de supports coulissants ; et
un entraîneur d'actionneur conçu pour déplacer sélectivement l'élément actionneur afin de provoquer un changement de position d'au moins l'un parmi les premier et second éléments de support rigides ; et éventuellement l'entraîneur d'actionneur étant une vis d'alimentation, et la vis d'alimentation étant accouplée rotative au second élément de support rigide et accouplée de manière filetée à l'élément d'actionneur ; et éventuellement
comprenant en outre un moteur conçu pour faire tourner sélectivement la vis d'alimentation.

10. Système selon l'une quelconque des revendications 6 à 9, chacun des éléments télescopiques de verrouillage ayant une première extrémité fixée à demeure au premier élément de support rigide et une seconde extrémité fixée à demeure au second élément de support rigide ; ou éventuellement
chacun des éléments télescopiques de verrouillage ayant une première extrémité fixée rotative au premier élément de support rigide et une seconde extrémité fixée rotative au second élément de support rigide ; ou éventuellement la première paire d'éléments télescopiques de verrouillage étant accouplés rotatifs l'un à l'autre et la seconde paire d'éléments télescopiques de verrouillage étant accouplés rotatifs l'un à l'autre ; ou éventuellement
les première et seconde paires d'éléments télescopiques de verrouillage étant collectivement conçus pour permettre un réglage sélectif et le verrouillage du système au niveau de n'importe laquelle parmi une pluralité de distances différentes entre les premier et second éléments de support rigides.

11. Système selon la revendication 1, la première paire d'éléments transversaux étant accouplés rotatifs l'un à l'autre et la seconde paire d'éléments transversaux étant accouplés rotatifs l'un à l'autre.
